(19) Europäisches Patentamt
European Patent Office
Office européen des brevets

(11) **EP 2 154 496 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(51) Int Cl.:
**G01F 23/284** (2006.01)

(21) Anmeldenummer: **08106008.9**

(22) Anmeldetag: **17.12.2008**

(54) **TDR-Sensor und -Messverfahren**

Sensor and measuring device

Capteur et procédé de mesure

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.08.2008 EP 08105050**

(43) Veröffentlichungstag der Anmeldung:
**17.02.2010 Patentblatt 2010/07**

(73) Patentinhaber: **SICK AG**
**79183 Waldkirch (DE)**

(72) Erfinder: **Jahn, Axel**
**79183 Waldkirch (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A- 1 069 649     EP-A- 1 186 869**
**WO-A-98/24013      WO-A-02/063249**
**US-A- 4 135 397     US-A1- 2004 046 571**

**Beschreibung**

Die Erfindung betrifft einen Sensor sowie ein Messverfahren nach dem TDR-Prinzip zur Messung der Entfernung zu einer Grenzfläche gemäß den Oberbegriffen von Anspruch 1 und 11.

Das TDR-Messprinzip (time domain reflectometry) basiert auf der Bestimmung von Laufzeiten eines elektromagnetischen Pulses, um den Abstand einer Diskontinuität des Leitungswellenwiderstandes wie etwa eines Kabelbruchs oder einer Produktgrenzfläche zu ermitteln. Es ähnelt somit dem Radar, wobei der Unterschied darin besteht, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen.

Das Messprinzip an sich ist einfach. Ein sehr kurzer elektrischer Sendeimpuls wird in die Leitung eingespeist und durchläuft diese zu ihrem Ende hin. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen.

Sensoren, die auf dem TDR-Prinzip beruhen, werden unter anderem für die Bestimmung von Füllständen eingesetzt. Die Leitung entspricht hier einer Messsonde, welche typischerweise annähernd lotrecht von oben in dem zu überwachenden Tank eingebaut ist und bis nahe an den Tankboden heranreicht.

Bei derartigen Füllstandssensoren wird zwischen offenen Sonden und geschlossenen Sonden unterschieden. Die erstgenannten bestehen aus einem einfachen Leiter und nutzen die Umgebung als Gegenpol der Sondenkopplung. Speziell bildet also die Metallwand des Tanks den Rückleiter. Das Einsatzgebiet solcher Sensoren ist daher auf Behälter aus leitendem Material beschränkt. Die offene Sonde wirkt als Sendeantenne, deren Sendeimpuls abgestrahlt wird und die im Behälter vorhandenen Medien durchläuft. Da sich die Einbauorte und die Geometrien von Tank zu Tank unterscheiden können, sind die Reflexionswege nicht allgemein und eindeutig vorhersagbar. Zudem erfährt das Sendesignal eine starke Dämpfung durch die Medien. Vor allem im oberen Bereich des Behälters hängt die Wellenausbreitung in erheblichem Maße von der Geometrie des Behälters ab und beeinträchtigt so die Messgenauigkeit des Sensors. Gleichzeitig erfährt das Sendesignal eine stärkere Dämpfung durch das Medium und auch hierdurch liefert der Sensor ungenauere Messergebnisse. All dies erhöht den Aufwand in der Auswertung beträchtlich und erfordert meist eine individuelle Kalibrierung des Gesamtsystems.

Geschlossene Sonden dagegen bestehen meist aus einer koaxialen Leitung, die selbst ihren Innenleiter und Außenleiter mitbringt. In diesem Fall wird die Mikrowelle von der koaxialen Leitung geführt, womit der Sensor unabhängig von dem Behälter wird, in dem er eingesetzt ist. Hier werden die Übereinstimmungen mit der ursprünglichen Kabelmesstechnik besonders deutlich. Der untere Teil des Innen- und des Außenleiters steht im Kontakt zur Flüssigkeit. Bohrungen, Schlitze oder ähnliche Öffnungen im Außenleiter stellen dabei sicher, dass der Füllstand am Innenleiter mit dem im Tank übereinstimmt. Im oberen Bereich, zwischen dem Einspeisepunkt für den Sendeimpuls und der Mediumoberfläche, befindet sich Luft zwischen dem Innen- und Außenleiter.

Als eine Art Zwischenlösung zwischen geschlossenen und offenen Systemen ist aus der EP 0 799 407 B1 bekannt, zwar nur einen Einzelleiter in den Tank einzuführen, aber als Bezugsfläche für die Welle eine sogenannte Launcherplate am Sensorkopf vorzusehen. Diese Launcherplate bildet so etwas wie das Rudiment eines Außenleiters, zumindest im oberen Bereich der Sonde. Damit lässt sich auch ohne metallischen Behälter eine Einzelleitersonde verwenden. Die Sonde wirkt wie im Fall der offenen Anordnungen als Sendeantenne. Nachteile durch Tankgeometrien, unterschiedliche Einbauorte und Dämpfung der offenen Sonde vermeidet die Launcherplate allenfalls partiell.

Bei Verwendung offener, unsymmetrischer Sondensysteme wie einer Einzelstabsonde mit Launcherplate in nicht-metallischen Tanks können sich auch Probleme mit der elektromagnetischen Verträglichkeit (EMV) bezüglich Abstrahlung und Einstrahlung ergeben. So kann ein Teil der ausgesendeten Energie das Tankvolumen verlassen und sich in der Umgebung ausbreiten. Im schlimmsten Fall führt das zu Störungen bei benachbarten Geräten. Aus den gleichen Gründen sind solche Sondenanordnungen auch empfindlich gegenüber Feldeinstrahlungen, die von außen auf den Sensor wirken. In einer rauen Industrieumgebung kann dies zu nennenswerten Problemen in der Applikation führen.

Geschlossene Leiteranordnungen wie beispielsweise Koaxialsonden ermöglichen sehr reproduzierbare Messungen in beliebigen Tankformen. Sie sind aber schwer zu reinigen und potentiell anfälliger gegenüber Ablagerungen. Ganz besonders bei Füllstandsmessungen im Lebensmittelbereich ist dies ein gravierender Nachteil, da sich die einschlägigen Hygienevorschriften nicht oder nur sehr schwer einhalten lassen.

Einzelleitersonden dagegen können zwar sehr viel kostengünstiger hergestellt und auch erheblich einfacher gereinigt werden, bringen aber die oben beschriebenen Nachteile bei der Messgenauigkeit durch Dämpfung und Abhängigkeiten von Behältermaterial und -geometrie mit sich.

Wesentliches Merkmal eines jeden Mediums für die TDR-Messung ist die relative Dielektrizitätskonstante $\varepsilon_r$ gegenüber Luft. Diese ist der Grund dafür, weshalb sich der Wellenwiderstand einer gegebenen Koaxialsonde bei gleichbleibender Geometrie im Kontaktbereich mit dem Medium verringert. Für eine Koaxialleitung gilt in guter Näherung:

$$Z_W = \frac{60\Omega}{\sqrt{\varepsilon_r}} * Ln\left(\frac{d_a}{d_i}\right)$$

mit:

$Z_W$: Wellenwiderstand der Koaxialleitung,
$\varepsilon_r$: Dielektrizitätskonstante des Mediums gegenüber Luft,
$d_a$: Durchmesser des Außenleiters und
$d_i$: Durchmesser des Innenleiters.

Die Grenzfläche zwischen Luft und Medium, oder spezieller Flüssigkeit, entspricht der Füllstandshöhe. Sie stellt für den elektrischen Impuls eine Störstelle dar, an welcher ein Teil der Sendeenergie reflektiert wird und zu einem messbaren Empfangssignal führt. Die Amplitude der reflektierten Welle ist also abhängig vom $\varepsilon_r$-Unterschied zwischen Luft und den zu vermessenden Medien. Sobald an der Grenzfläche nur geringe Unterschiede der Dielektrizitätskonstanten $\varepsilon_r$ vorhanden sind, führt dies zu kleinen Amplituden des reflektierten Signals. Das beeinträchtigt in der Auswertung die erreichbare Messgenauigkeit beim Ermitteln der Grenzflächenposition.

Das ferne Sondenende hat im normalen Betrieb typischerweise Kontakt mit der zu vermessenden Flüssigkeit. Es ist immer mit einer komplexen Impedanz abgeschlossen. Häufig ist dies ein Leerlauf, also ein offenes Leitungsende, ein Kurzschluss oder eine an den Wellenwiderstand der Leitung angepasste reelle oder komplexe Impedanz. Bei jeder dieser konkreten Realisierungen des Abschlusses wird bei einem Unterschied zwischen Wellenwiderstand und Abschlusswiderstand am Sondenende ein zusätzlicher Reflexpuls erzeugt, der keinen nutzbaren Messwert einer Grenzfläche, sondern lediglich als Messartefakt das Ende der Sonde repräsentiert. Mit diesem in der Realität starken Störsignal überlagert sich unabhängig vom Sondentyp ein Messsignal in der Nähe des Sondenendes teilweise oder vollständig, so dass also eine Totzone besteht, in der keine zuverlässigen Messergebnisse ermittelt werden können. Niedrige Füllstände oder allgemein Füllstände im Bereich des Sondenendes in einem Behälter lassen sich damit nicht genau oder gar nicht mehr messen, was umso störender wird, je kleiner der Behälter ist. Die Messung ist am schwierigsten für niedrige Dielektrizitätskonstanten $\varepsilon_r$, da dann wegen der annähernd gleichen Laufzeiten in Luft und im Medium der Messpuls und der Artefaktpuls besonders dicht aufeinander folgen. Bei höheren Dielektrizitätskonstanten $\varepsilon_r$ wird der Abstand zwischen diesen beiden Pulsen durch die höheren Laufzeiten im Medium etwas entzerrt.

Bei offenen Einzelstabsonden bildet idealerweise ein elektrischer Leerlauf den Abschluss. In der Realität bildet sich jedoch zwischen dem Sondenende und dem Metalltank eine Kapazität aus. Der genaue Wert dieser komplexen Abschlussimpedanz ist abhängig von der konkreten Einbausituation und damit nicht eindeutig vorhersagbar. Daher ist im Voraus eine allgemeingültige Kompensation unmöglich.

Mehrere herkömmliche Ansätze sind bestrebt, die Totzone am Sondenende zu minimieren. In der DE 100 43 838 A1 ist dazu ein Abschlusswiderstand vorgesehen, welcher auf den Wellenwiderstand abgestimmt sein soll, um die Energie zu absorbieren. Die optimale Abstimmung ist aber in der Praxis gar nicht möglich, weil die dafür erforderliche Impedanz im Voraus nicht bekannt ist. Der Wellenwiderstand der Leitung hängt von der relativen Dielektrizitätskonstanten $\varepsilon_r$ des Mediums ab, die in weiten Bereichen variieren kann, nämlich typischerweise von ca. $\varepsilon_r$ = 1,8 bei Ölen bis ca. $\varepsilon_r$ = 80 bei Wasser. Der Wert des Abschlusswiderstands wird aber bereits bei der Produktion des Sensors festgelegt. Zudem kann sogar noch eine Abhängigkeit von der aktuellen Eintauchtiefe bzw. Füllhöhe bestehen, die nicht konstant und somit für eine Festlegung bei Produktion nicht bekannt ist. Somit lässt sich der Einfluss des Abschlusswiderstands in den meisten Anwendungsfällen nur verringern, jedoch nicht grundsätzlich unterdrücken.

Der Widerstand und seine Verbindungen mit der Sonde müssen außerdem den Beanspruchungen etwa durch eine umspülende Flüssigkeit standhalten, da sie in direktem Kontakt mit dem Medium stehen. Bei hochkorrosiven, heißen oder chemisch aggressiven Flüssigkeiten kann dies eine weitere Herausforderung darstellen und im Bereich Lebensmittel können umgekehrt hygienisch nicht zulässige Ablagerungen und Verunreinigungen des Mediums durch den Abschluss der Sonde entstehen, vor allem wenn sie von dem Medium angegriffen wird.

Im Übrigen führt der Abschluss durch seine endliche Ausdehnung und seine Anordnung zwischen Sonde und Behälterboden selbst eine Totzone ein. Zugleich ist der Abschluss für das Medium nicht durchlässig, so dass aufgrund von Kapillarkräften Flüssigkeit in der Sonde aufsteigen oder verbleiben kann und damit der Messung einen nicht der Realität entsprechenden Füllstand suggeriert.

Schließlich werden die Anforderungen der Anpassung mit steigender Bandbreite beziehungsweise Arbeitsfrequenz zunehmend schwieriger. Diese Arbeitsfrequenz möchte man aber für eine hohe Messgenauigkeit nicht zuletzt gerade im Bereich der Totzone für möglichst steile Pulse sehr hoch halten.

In einem anderen Ansatz gemäß der DE 101 01 714 A1 wird eine Koaxialsonde am Behälterboden um 90° gebogen und dort noch ein Stück horizontal geführt, ehe sie offen endet. Die Idee dabei ist, dass zwar ein Artefaktpuls am Sondenende entsteht, dieser aber zeitlich gegenüber einem Messpuls bei niedrigst möglichem Flüssigkeitsstand durch die horizontale Strecke verzögert wird. Nachteilig hieran ist neben der umständlicheren und störanfälligeren Herstellung und Montage, dass der Artefaktpuls dennoch nicht unterdrückt wird und dass in dem 90°-Winkel erneut ein wenn auch abgeschwächter weiterer Artefaktpuls entsteht.

Besonders hohe Anforderungen stellt die Messung von geschichteten Flüssigkeiten mit mehreren Grenzflächen wie beispielsweise Öl auf Wasser. Sind die Schichten außerdem noch dünn, so überlagern sich die von den Grenzflächen verursachten Reflektionen. Dann lassen sich die Positionen der beteiligten Grenzflächen nicht mehr trennen. Eine gewisse Abhilfe ist durch erhöhte Messbandbreiten denkbar, bei dem die Pulse steiler und damit besser auflösbar werden.

Aus der DE 199 58 584 C1 ist bekannt, eine Koaxialsonde zu verwenden und ihr einen zweiten Leiter nebenzuordnen, welcher an einem dem Messkopf gegenüberliegenden Ende der Koaxialsonde mit deren Innenleiter verbunden ist. Die Grenzfläche zwischen den beiden Medien wird dann quasi von unten durch eine auf dem zweiten Leiter zurücklaufende Welle detektiert, an der ein Reflex entsteht, welcher sich leichter von dem Übergang Luft auf oberes Medium in dem Koaxialleiter separieren lässt. Diese Druckschrift befasst sich allein mit dem Sonderfall geschichteter Medien und schweigt vollständig zu der Frage der Vermeidung einer Totzone. Auf dem deutlich beabstandeten zweiten Leiter läuft die Welle nach Art einer Einzelsonde bis zu der Grenzfläche zwischen den beiden Medien zurück, mit den oben zu Einzelsonden beschriebenen Nachteilen. Die fehlende Symmetrie zwischen der Koaxialleitung für den Hinweg und der Einzelleitung für den Rückweg macht die Messung ungenau und schwer für beliebige Behälter und Anwendungen verallgemeinerbar. Nicht zuletzt ist die Reinigung der dargestellten Konstruktion mit ihren zahlreichen Kanten ausgesprochen aufwändig.

Aus der US2007/0090992 A1 ist bekannt, zwei TDR-Sonden nebeneinander anzuordnen, um parallel mehrere Grenzflächen oder Füllstände auszumessen. Diese beiden Sonden sind aber nicht untereinander verbunden, so dass kein rücklaufender Puls vorhanden ist und überhaupt nach Möglichkeit jegliche Kopplung der beiden Sonden untereinander vermieden wird.

In der DE 100 44 888 A1 wird der Artefaktpuls ausgenutzt, um anhand der Laufzeitverzögerung innerhalb des Mediums gegenüber der Laufgeschwindigkeit in Luft die relative Dielektrizitätskonstante $\varepsilon_r$ des Mediums im Behälter während des Betriebs zu ermitteln. Sämtliche herkömmlichen aufwändigen Maßnahmen zu Vermeidung des Artefaktpulses entziehen diesem Verfahren seine Grundlage, nämlich den Artefaktpuls, so dass dieses Verfahren bei einem TDR-Sensor ohne Totzone gerade nicht funktionieren kann.

Die WO02/063249 A2 offenbart ein TDR-Füllstandsmesssystem mit zwei voneinander isolierten Sondenleitern, in die Mikrowellenpulse gleichzeitig, aber mit 180°-Phasenverschiebung zueinander eingekoppelt werden.

Aus der US2004/0046571 ist ein Verfahren zur Charakterisierung von Substanzen mit multistatischen Sonden bekannt. Dabei wird ein Signal über einen Sender in einem Sondenkopf in einen Sendeleiter eingekoppelt und erreicht über einen Empfangsleiter einen Empfänger in dem Sondenkopf. Die beiden Leiter sind untereinander nicht verbunden. In weiteren Ausführungsformen können mehrere Sendeleiter und/oder mehrere Empfangsleiter vorgesehen sein, die mit demselben oder eigenen Sendern und Empfängern verbunden sind.

Aus der US 4,135,397 ist ein Füllstandsmesssystem bekannt, bei dem Pulse in eine Koaxialleitung eingespeist und die Zeit bis zum Empfang reflektierter Pulse bestimmt wird. Die Koaxialleitung ist an ihrem unteren Ende mit einer Impedanz abgeschlossen.

In der EP 1 069 649 A1 wird ein besonders für die Anwendung in der Lebensmittelindustrie geeigneter Wellenleiter für ein Mikrowellen-Füllstandsmessgerät vorgestellt.

Aus der WO98/24013 A2 ist ein Füllstandsmesser mit einer als Leiterschleife ausgebildeten Sonde bekannt.

Die EP 1 186 869 A2 zeigt eine Füllstandsmessvorrichtung mit einem ohmschen Widerstand als Abschluss. Die Konstruktion mit dem Widerstand am Sondenende ist in einer Ausführungsform einige Millimeter hoch mit isolierender Vergussmasse gefüllt.

Es ist daher Aufgabe der Erfindung, einen Sensor und ein Verfahren nach dem TDR-Prinzip mit möglichst großer Unabhängigkeit von der Messsituation und hoher Messgenauigkeit über den gesamten Messbereich anzugeben.

Diese Aufgabe wird durch einen Sensor gemäß Anspruch 1 sowie ein Verfahren gemäß Anspruch 11 gelöst.

Die erfindungsgemäße Lösung geht von dem Grundgedanken aus, die Sonde robuster gegenüber Störsignalen zu machen. Deshalb werden zumindest zwei Leiter eingesetzt, die entweder bei Gleichtaktansteuerung einen besseren, beispielsweise redundanten Signalweg bieten oder die bei Gegentaktansteuerung sowohl weniger EMV verursachen als auch unanfälliger gegen äußere Signale werden, da die Welle auf zwei Wegen mit unterschiedlichem Vorzeichen läuft und Abstrahlungen sich nach außen weitgehend kompensieren. Damit wird besonders der Einsatz einer nicht durch Außenleiter gekapselten Sonde vereinfacht und die Messgenauigkeit erhöht. Die Erfindung wird anhand von Ausführungsformen mit zwei Leitern beschrieben, die Prinzipien lassen sich aber analog auf Mehrleitersysteme mit n Leitern verallgemeinern.

Das Signal ist häufig ein Puls, sogar in der Praxis ein zeitlich sehr scharfer Puls. Er kann parabelförmig, gaussisch oder anders geformt sein. Die Erfindung umfasst aber auch andere denkbare Signalformen, etwa eine Sprungfunktion mit Auswertung der Sprungantwort, Pulsfolgen oder andere funktionale Verläufe. Ebenso ist zwar bevorzugt, die Signalform oder spezieller die Pulsform mittels einer Unterabtastung aufzuzeichnen und dann auf die zeitliche Lage von Extrema auszuwerten, beispielsweise durch Schwellenoperationen oder sonstige prinzipiell bekannte Verfahren der Funktionsdiskussion. Es wird aber im Rahmen dieser Beschreibung als gleichwertig angesehen, andere mathematische Verfahren einzusetzen, um die Laufzeit zu bestimmen, etwa Korrelationen oder Faltungen mit einer Referenz und weitere.

Das Signal ist bevorzugt ein Mikrowellensignal. Dies ist der übliche und gut beherrschte Frequenzbereich der TDR-Technologie. Die Rückleitung führt zwar bevorzugt, nicht jedoch notwendig, wieder ganz bis an den Messkopf heran. Die Rückleitung kann, wenn sie wieder bis an den Messkopf geführt ist, dort angeschlossen werden. Auf diese Weise kann das durchgehende Signal gemessen oder seine Energie abgeleitet werden. Ist die Rückleitung nicht vollständig bis an den Messkopf geführt oder dort nicht oder nicht mit einem passenden Widerstand abgeschlossen, so entsteht hier ein Artefaktsignal, das aber zeitlich sehr deutlich vom Messsignal separiert ist, nämlich zumindest um die Zeit für die doppelte Laufstrecke auf dem Rückleiter und daher die Messgenauigkeit nicht mehr beeinträchtigt.

Bevorzugt ist ein Abschluss vorgesehen, um Artefaktpulse an Enden der Sonde zu unterdrücken, wobei der Abschluss einen Kurzschluss, einen Leerlauf, einen induktiven Widerstand, einen kapazitiven Widerstand und/oder einen reellen Widerstand aufweist. Mit diesen Bausteinen oder einer Kombination daraus, die auch einen der genannten Bausteine mehrfach enthalten kann, lässt sich der Puls sowohl unterdrücken als auch in seiner zeitlichen Lage beeinflussen, so dass je nach Ausbildung der Sonde, Anwendung und Messverfahren ein geeigneter Abschluss gewählt werden kann.

Der Abschluss ist besonders bevorzugt derart dimensioniert und ausgebildet, dass Artefaktpulse sowohl bei Gleichtakt- wie bei Gegentaktsteuerung unterdrückt werden, insbesondere durch eine Dreiecksanordnung oder eine Sternanordnung der Abschlusselemente. Ein herkömmlich dimensionierter Abschluss ist bestenfalls für eine Gleichtaktansteuerung geeignet. Der Vorteil einer Gegentaktansteuerung kann erst bei richtig angepasstem Abschluss voll zum Tragen kommen. Gemäß dieser Ausführungsform ist die Sonde für beide Arten der Ansteuerung geeignet, so dass Artefakte durch sowohl Gegentakt- wie Gleichtaktansteuerungen oder -störungen gleichermaßen unterdrückt werden.

Erfingungsgemäß ist für jeden Leiter ein Rückleiter vorgesehen, der mit dem zugehörigen Leiter an einem dem ersten Sondenende gegenüberliegenden zweiten Sondenende elektrisch verbunden ist, so dass das Signal auf den Rückleitern zurücklaufen kann. Damit wird die Energie des Artefaktsignals für die Messung ausgenutzt oder zumindest so abgeleitet, dass nicht gerade außen am zweiten Sondenende ein Abschluss notwendig ist. Indem das Signal auf jeweils einem Rückleiter weitergeführt wird, ist die Totzone effektiv vermieden und die Voraussetzung für eine genauere Messung über die gesamte Sondenlänge geschaffen. Die Welle soll dabei auf den Rückleitern ebenso effektiv geführt werden wie auf den (Hin)leitern. Es gibt dann keine Totzone am zweiten Sondenende, der Messbereich ist erweitert und auch für niedrige Füllstände eine hochgenaue Messung ermöglicht. Der Sensor kann ohne Kanten und Vorsprünge gebaut werden. Insbesondere wird ein Abschluss entweder überflüssig oder kann an einem Ort eingebaut werden, an dem er nicht mit dem Medium in Kontakt kommt oder leichter zugänglich ist. EMV-Probleme aufgrund frei in den Behälter gestrahlter Signale werden verhindert.

Die Verbindung zwischen den Leitern und Rückleitern weist bevorzugt eine runde U-Form oder eine eckige U-Form mit einer Laufstrecke parallel zu der Grenzfläche auf, wobei die Verbindung hochfrequenzkompensiert ist, um Artefaktreflexe an den Winkelstellen zu unterdrücken oder zu vermeiden, wobei insbesondere die Verbindung ein separates Leitungsstück als Teil eines Abstandselements bildet. Mit dieser Verbindung stellen also Leiter und Rückleiter elektrisch gesehen jeweils gemeinsam einen einzigen grob U-förmigen Leiter dar. Dies kann auch mechanisch nachvollzogen, diese Leiter also mit der Verbindung einstückig ausgebildet sein. Die Geometrie der Verbindung kann variiert werden, so dass Abweichungen von der U-Form und deren Rundungen entstehen. Das Verbindungsstück kann als Abstandselement ausgebildet werden, um die verschiedenen Leiter voneinander elektrisch isoliert und möglichst gleichmäßig beabstandet zu halten. Gerade bei kurzen Sonden kann gemeinsam mit einer entsprechenden Geometrie am Messkopf die Beabstandung hierdurch schon sichergestellt sein, zumindest wird eine zusätzliche Stützstelle gegeben.

Auf dem Rückleiter entsteht beim Übergang vom Medium zur Luft ein Reflexsignal, das sich bei niedrigen Füllständen mit dem Messsignal auf dem Leiter überlagern kann. Die horizontale Laufstrecke separiert diese beiden Signale zeitlich voneinander, so dass eine Totzone für niedrige Füllstände verringert oder vermieden wird. Dieser Effekt wird noch verstärkt, weil die horizontale Laufstrecke, sofern die Sonde den Behälter nicht nur teilweise durchmisst und der Behälter nicht ganz leer ist, innerhalb des Mediums liegt. Dadurch ist die Laufstrecke auf der Verbindung beziehungsweise dem Verbindungselement gegenüber Luft oder Vakuum zusätzlich verlangsamt.

Der Abschluss ist bevorzugt im Innenraum der Leiter angeordnet, oder alternativ an den Rückleitern vorgesehen oder an die Rückleiter angeschlossen innerhalb eines Messkopfes am ersten Sondenende angeordnet ist.

Im Innenraum des Leiters ist der Abschluss verkapselt und kommt nicht mit dem Medium in Kontakt, und auch seine endliche geometrische Ausdehnung ist innerhalb des Innenleiters integriert und beeinträchtigt somit nicht den Messbereich für besonders niedrige Füllstände. Man kann den Abschlusswiderstand und den Leitungsabschnitt zu dem Abschlusswiderstand als Rudiment eines Rückleiters auffassen, in den die Welle ein Stück hineinläuft, um dort ihre Energie zu deponieren. Sofern der Abschlusswiderstand sehr nahe am zweiten Sondenende angeordnet ist, bleibt dieser Rückleiter sehr kurz. Je weiter der Abschlusswiderstand in verschiedenen Ausführungsformen die Sonde hinauf verschoben wird, desto mehr nähert sich die Anordnung einem vollständig bis zum Messkopf verlaufenden Rückleiter an. Ist der Abschlusswiderstand im Messkopf angeordnet, so kann wahlweise das rücklaufende Signal im Messkopf über dem Abschlusswiderstand gemessen werden, während seine Energie vom Abschlusswiderstand absorbiert wird. Die Anordnung im Messkopf hat den Vorteil, dass keinerlei direkter Kontakt mit dem Medium möglich ist und der Widerstand in die Messkopfelektronik integrierbar ist. Da kein Kontakt mit dem Medium möglich ist, sind die Leitungswiderstände wohldefiniert, so dass ein fester Abschlusswiderstand gewählt werden kann, der unabhängig vom Medium optimal abschließt.

Je Leiter ist bevorzugt ein Bezugsleiter vorgesehen. Mit den jeweils zumindest doppelt ausgeführten Leitern und Rückleitern hat die Sonde beispielsweise die Gestalt zweier parallel zueinander liegender U-förmiger Einzelleiter mit einem gemeinsamen Bezugsleiter in der Mitte, mit jeweils einem Bezugsleiter für den Hin- und Rückweg der Signale, mit sogar vier Bezugsleitern für jeden der beiden (Hin)leiter und Rückleiter, oder Mischformen davon. In einem anderen Beispiel werden zwei Koaxialleitungen als parallel zueinander liegende U-förmige hin- und rückführende Koaxialleitungen ausgebildet. In dem letztgenannten Beispiel ist der Koaxialleiter so ausgebildet, dass er die beiden differentiell geführten Leiter beziehungsweise Rückleiter gemeinsam umgibt, die differentiellen Leitungswege also untereinander elektromagnetisch nicht abschirmt.

Speziell ist bevorzugt ein gemeinsamer Bezugsleiter vorgesehen, insbesondere als mittig zwischen den Leitern und den Rückleitern angeordnete Bezugsplatte, wobei insbesondere die Leiter und von dem Bezugsleiter beabstandet und/oder durch elektrisch isolierende Träger mit dem Bezugsleiter verbunden sind.

Die Sonde wird so kompakter. Die mittige Anordnung ist für symmetrische Leitungseigenschaften bevorzugt. Abweichungen hiervon im Rahmen von Fertigungstoleranzen, aber auch gezielte Abweichungen schaden aber nicht, solange die Führung durch den Bezugsleiter gewährleistet bleibt. Den Bezugsleiter ohne Träger zu beabstanden hat den Vorteil der einfacheren Fertigung und der Materialersparnis, aber dann muss die Beabstandung durch mechanische Eigenstabilität, Vorspannung und/oder zusätzliche Abstandselemente gewährleistet werden. Mit Trägern, die bevorzugt über die gesamte Länge der Sonde vorgesehen sind, ist wegen der erhöhten mechanischen Stabilität die Beabstandung und damit Vermeidung von Kurzschlüssen leichter sicherzustellen. Die Träger weisen bevorzugt unempfindliche und die Messung möglichst wenig beeinflussende Werkstoffe wie Teflon auf.

Dank der mehreren oder des gemeinsamen Bezugsleiters werden für die auf dem Rückleiter laufende Welle insgesamt ähnliche Vorteile verwirklicht, wie in herkömmlichen Systemen, also ohne Rückleitung, eine geschlossene Sonde gegenüber einer offenen Sonde zeigt.

Der Bezugsleiter ist bevorzugt als Metallkern oder Träger mit Metallüberzug mit in Längsrichtung verlaufenden luft- oder materialgefüllten Aussparungsnuten ausgebildet, wobei Leiter und Rückleiter über den Aussparungsnuten angeordnet, insbesondere Leiter und Rückleiter als Metallstreifen, Kupferstreifen oder Leiterbahnen auf Trägern oder Leiterplatten ausgebildet sind, welche die Aussparungsnuten abschließen. Leiter und Rückleiter liegen dabei nochmals bevorzugt ungefähr auf einem Außenumfang um den Metallkern in den durch die Aussparungsnuten entstehenden Lücken dieses Außenumfangs. In den Ausführungsformen mit Metallkern und Aussparungsnuten stellt sich die Sonde trotz ihrer relativ komplexen Wellenleitungseigenschaften nach Außen einfach dar und ist entsprechend einfach zu montieren und zu warten. Besonders bei Verwendung von Leiterplatten mit Leiterbahnen, aber auch bei den anderen Ausführungsformen mit beliebigen Trägern und Leitern, ist die Herstellung in einer Art Verbundkörper einfach, zuverlässig und kostengünstig. Leiter und Rückleiter werden durch die Aussparungsnuten elektrisch vom Bezugsleiter getrennt.

Bezugsleiter, Leiter und Rückleiter sind bevorzugt als flexible Leiter einer Seilsonde ausgebildet, insbesondere indem der Bezugsleiter als Stahlgeflecht und Leiter und Rückleiter als Metalllitzen ausgeführt sind, wobei ein Isolationsmaterial die Leiter voneinander elektrisch isoliert und/oder nach außen schützt, um insgesamt ein mehradriges Kabel zu bilden. Auch bei dieser Ausführungsform stellt sich die Sonde nach Außen sehr einfach und homogen dar, sie bildet letztlich nur ein besonderes mehradriges Kabel. Seilsonden werden gerade bei großen Behältern beispielsweise mit Größenordnungen von 10 Metern zu messender Füllstände gegenüber steifen Sonden bevorzugt.

Die Anordnung von Leitern, Rückleitern und/oder Bezugsleiter weist bevorzugt einen flachen Querschnitt auf, insbesondere indem alle Leiter und Rückleiter in einer Ebene angeordnet sind und der Bezugsleiter eine geringe Dicke mit Aussparungen für die Leiter aufweist, und die Sonde ist somit dafür ausgebildet, nachträglich flach an einer Behälterwand angebracht und von einem leicht zu reinigenden Material niedriger Dielektrizitätskonstante wie Teflon ummantelt zu werden. Die Positionierung an der Behälterwand hat den Vorteil, dass die Sonde und damit der größte Teil des Sensors kompakt montiert ist und bei Befüllung oder ähnlichen Arbeitsvorgängen nicht behindern kann. Aus praktischer Sicht bleiben durch die flache Anordnung und das leicht zu reinigende Material die Innenwände des Behälters unverändert. Damit werden auch Probleme mit der Reinigung der Sonde vermieden.

Die Sonde ist vorteilhafterweise hygienisch ausgebildet, insbesondere beschichtet oder mit einem Schrumpfschlauch überzogen und/oder weist gerundete Kanten auf, wobei das Material der Sonde, der Beschichtung und/oder des Schrumpfschlauches schmutzabweisend und/oder antibakteriell ist. Damit ist der Einsatz in Lebensmittelanwendungen, also etwa Messung von Füllständen für Nahrungsmittel oder Getränke möglich. Hygienische Materialien können erneut die oben genannten Werkstoffe Teflon, PBT oder Keramiken sein, aber auch andere Kunststoffe und besonders mikrostrukturierte Beschichtungen. Weitere Materialien, die im Übrigen an jeder Stelle der Beschreibung für die nichtmetallischen Bestandteile als Ersatz für das häufig genannte Teflon dienen können, sind alle Arten von fluorierten Kunststoffen sowie PEEK (Poly-etherketon), PP (Polypropylen), PET (Polyethylenterephthalat), PPSU (Polyphenylsulfon) oder PC (Polycarbonat, Makrolon) und mit etwas höheren Dielektrizitätskonstanten $\varepsilon_r$, dafür einer hohen Vielfalt an möglichen Eigenschaften wie thermischer, chemischer und mechanischer Stabilität diverse Keramiken.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben. Umgekehrt ist die Steuerung bevorzugt dafür ausgebildet, eines der erfindungsgemäßen Auswertungsverfahren auszuführen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    eine schematische Darstellung eines TDR-Sensors in einer Anwendung als Füllstandssensor nach dem Stand der Technik;

Fig. 2    ein Blockschaltbild der Steuerung nach dem Stand der Technik des Sensors gemäß Figur 1;

Fig. 3    eine Ausführungsform eines Sensors mit einem Abschlusswiderstand im Innenleiter, die nicht in den Schutzbereich der Ansprüche fällt;

Fig. 4    eine Ausführungsform eines Sensors mit einem Abschlusswiderstand im Messkopf, die nicht in den Schutzbereich der Ansprüche fällt;

Fig. 5    eine Ausführungsform eines Sensors als offener Triaxialleiter mit einem Abschlusswiderstand im Messkopf, die nicht in den Schutzbereich der Ansprüche fällt;

Fig. 6    ein Ersatzschaltbild des Sensors gemäß Fig. 5 repräsentativ auch für andere Ausführungsformen eines TDR-Sensors mit Rückleiter;

Fig. 7    eine grafische Darstellung von Pulsen an verschiedenen Kontaktpunkten in dem Ersatzschaltbild gemäß Fig. 6;

Fig. 8a    eine beispielhafte grafische Darstellung eines ersten und zweiten Reflexpulses bei relativ hohem Füllstand;

Fig. 8b    eine Darstellung gemäß Fig. 8a bei niedrigem Füllstand;

Fig. 8c    eine Darstellung gemäß Fig. 8a bei sehr niedrigem Füllstand;

Fig. 9a    eine Ausführungsform eines Sensors mit durchgehendem u-förmigem Koaxialleiter, die nicht in den Schutzbereich der Ansprüche fällt;

Fig. 9b    eine Querschnittsdarstellung der Sonde des Sensors gemäß Fig. 9a;

Fig. 9c    eine Ausschnittsvergrößerung des Umkehrbereichs des Sensors gemäß Fig. 9a;

Fig. 10a    eine Ausführungsform eines Sensors ähnlich Fig. 9, hier mit eckiger Son-denführung, die nicht in den Schutzbereich der Ansprüche fällt;

Fig. 10b    eine Querschnittsdarstellung der eckigen Sonde und Leiter gemäß Fig. 10a;

Fig. 11    eine Vielzahl von Querschnitten analog Fig. 10b verschiedener Ausführungsformen von Leiter- und Sondenquerschnitten;

Fig. 12    eine Querschnittsdarstellung des Verbindungsbereichs zwischen Innenleiter und Rückleiter in einer Ausführungsform als Abstandshalteelement;

Fig. 13    drei Querschnittsdarstellungen zur Illustration der Beziehung zwischen einer Sonde aus Koaxialleitern und zweier Einzelleiter mit einer gemeinsamen Bezugsplatte beziehungsweise -leitung;

Fig. 14a    zwei Varianten einer Sonde mit von einer gemeinsamen Bezugsplatte ohne Träger beabstandetem Innenleiter und Rückleiter im Querschnitt, die nicht in den Schutzbereich der Ansprüche fällt;

Fig. 14b    zwei Varianten einer erfindungsgemäßen Sonde ähnlich Fig. 14a mit von einer gemeinsamen Bezugsplatte mit Träger beabstandetem Innenleiter und Rückleiter im Querschnitt;

Fig. 15    eine Querschnittsdarstellung einer weiteren Ausführungsform einer Sonde mit einem Metallkern und durch Leiterplatten abgeschlossenen Aussparungsnuten sowie dem Feldlinienverlauf darin, die nicht in den Schutzbereich der Ansprüche fällt;

Fig. 16a    eine Querschnittsdarstellung einer Variante der Ausführungsform gemäß Fig. 15 mit offenen oder luftgefüllten Aussparungsnuten;

Fig. 16b    eine Querschnittsdarstellung einer Variante der Ausführungsform gemäß Fig. 15 mit materialgefüllten Aussparungsnuten;

Fig. 17 eine Darstellung zur Erläuterung einer differentiellen Sonde sowie deren Gleichtakt- und Gegentaktwiderständen;

Fig. 18 eine Darstellung eines für Gleichtakt- und Gegentaktansteuerung optimierten Abschlusses in Dreiecksanordnung;

Fig. 19 eine Darstellung eines für Gleichtakt- und Gegentaktansteuerung optimierten Abschlusses in Sternanordnung;

Fig. 20 eine Darstellung gemäß Fig. 19 mit zusätzlicher DC-Entkopplung;

Fig. 21a eine schematische Schnittdarstellung einer flachen Sonde zur direkten Montage an einer Behälterwand;

Fig. 21b eine Draufsicht auf die flache Sonde an der Behälterwand gemäß Fig. 21 a;

Fig. 22a-f Querschnittsdarstellungen verschiedener Varianten einer erfindungsgemäßen Sonde mit differentieller Wellenführung mit diversen Leiterquerschnitten und Trägern zur Beabstandung der Leiter untereinander;

Fig. 23a eine Querschnittsdarstellung einer Ausführungsform der Erfindung als Seilsonde in einem mehradrigen Kabel;

Fig. 23b eine Darstellung gemäß Fig. 23a in einer Variante mit anderer Gestalt der Leitungsadern und des isolierenden Kabelmaterials;

Fig. 24a eine Darstellung ähnlich Fig. 16 einer differentiellen Ausführungsform mit einem Metallkern und differentiell ausgeführten Innen- und Rückleitern mit einem flexiblen Schrumpfschlauch als äußere Hülle; und

Fig. 24b eine Darstellung gemäß Fig. 24a mit einer Rohrhülle.

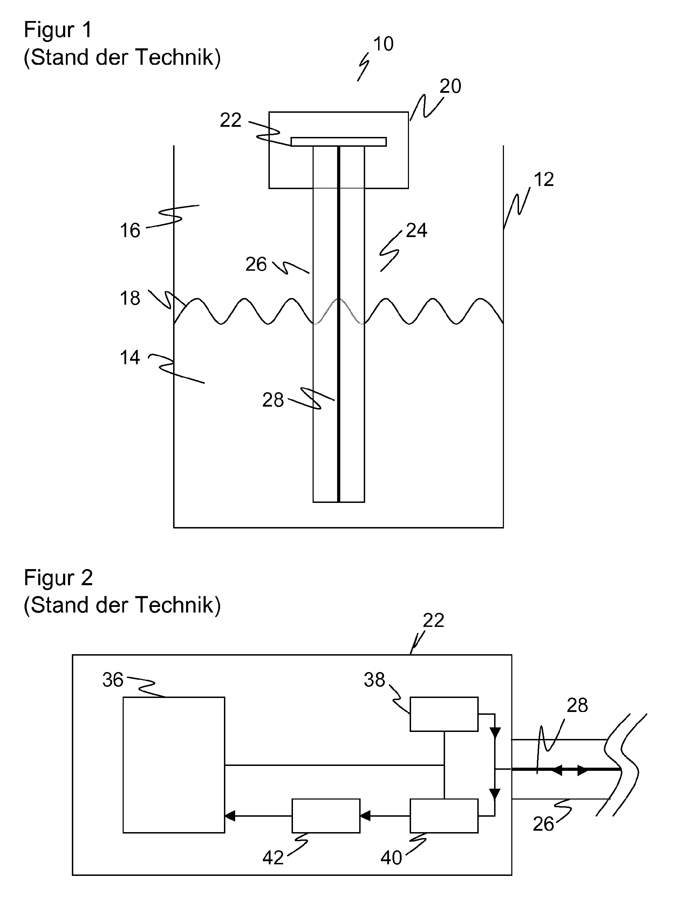

Figur 1 zeigt schematisch einen geschlossenen TDR-Sensor 10 nach dem Stand der Technik, der als Füllstandssensor in einem Tank oder Behälter 12 mit einem Medium oder einer Flüssigkeit 14 angebracht ist. Hier und im Folgenden bezeichnen gleiche Bezugszeichen dieselben oder sinngemäß entsprechenden Elemente, beispielsweise wird das Bezugszeichen 10 weiter unten auch für erfindungsgemäße Sensoren verwendet, welche ebenfalls den Grundaufbau des Sensors gemäß Figuren 1 und 2 zeigen.

Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist.

Dabei ist insbesondere an andere Grenzflächen 18 zu denken, beispielsweise zwischen verschiedenen Flüssigkeiten oder zu und zwischen Schüttgut oder Granulaten.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist.

Die in dem Sensorkopf 20 vorgesehene Steuerung 22 beziehungsweise ihre Platine ist in Figur 2 in einem Blockschaltbild dargestellt. Die eigentliche Steuerung bildet ein Mikroprozessor 36, der auch ein FPGA, ASIC oder ein ähnlicher digitaler Logikbaustein sein kann. Üblicherweise ist auch eine hier nicht dargestellte Zeitbasisschaltung zur Ansteuerung eines Mikrowellensenders 38 und eines Mikrowellenempfängers 40 vorgesehen. Die Sende- und Empfangseinheit 38, 40 wird von der Zeitbasisschaltung mit zwei leicht unterschiedlichen Frequenzen angesteuert, um durch das Verfahren der Unterabtastung einer Vielzahl von Empfangspulsen eine zeitgedehnte Aufnahme der Empfangspulsprofile zu erreichen. Diese Zeitdehnung ist erforderlich, weil Bausteine, welche die extrem kurzen Pulse mit genügender Auslösung digitalisieren könnten, entweder noch gar nicht existieren oder jedenfalls viel zu kostenintensiv wären. Grundsätzlich ist natürlich auch ein direktes Sampling ohne Zeitbasisschaltung vorstellbar.

Über einen Verstärker 42 wird das zeitgedehnte Messsignal an den Mikroprozessor 36 zur Messsignalauswertung geleitet. Bevorzugt ist der Verstärker 42 in der Lage, sich auf den Signalpegel einzustellen und somit unter Ausnutzung der Auflösung des Analog-Digitalwandlers auch kleine Messsignale auswerten zu können.

Wie auch schon einleitend beschrieben, wird bei einer Messung ein Puls über den Mikrowellensender 38 auf den Innenleiter 28 gegeben und die Laufzeit des an der Grenzfläche 18 entstehenden und in dem Mikrowellenempfänger 40 empfangenen Reflexpulses gemessen, um den Abstand der Grenzfläche 18 und damit den Füllstand in dem Behälter 12 zu ermitteln. Dieses Verfahren ist bekannt, erfindungsgemäße Erweiterungen werden weiter unten näher ausgeführt. Anstelle eines Pulses können in allen Ausführungsformen auch andere Signalformen verwendet werden, wie einleitend beschrieben.

Sowohl bei dem in den Figuren 1 und 2 dargestellten Sensor 10 als auch bei den erfindungsgemäßen Ausführungsformen weisen die Leiter, hier der Außenleiter 26, Schlitze oder andere geeignete Öffnungen auf, um einen Flüssigkeits- beziehungsweise Messmediumaustausch zu ermöglichen, soweit dieser Austausch gewünscht ist. Im Folgenden wird häufig nur von luftgefüllt gesprochen, damit ist zumeist dieser Austausch mit der Umgebung gemeint.

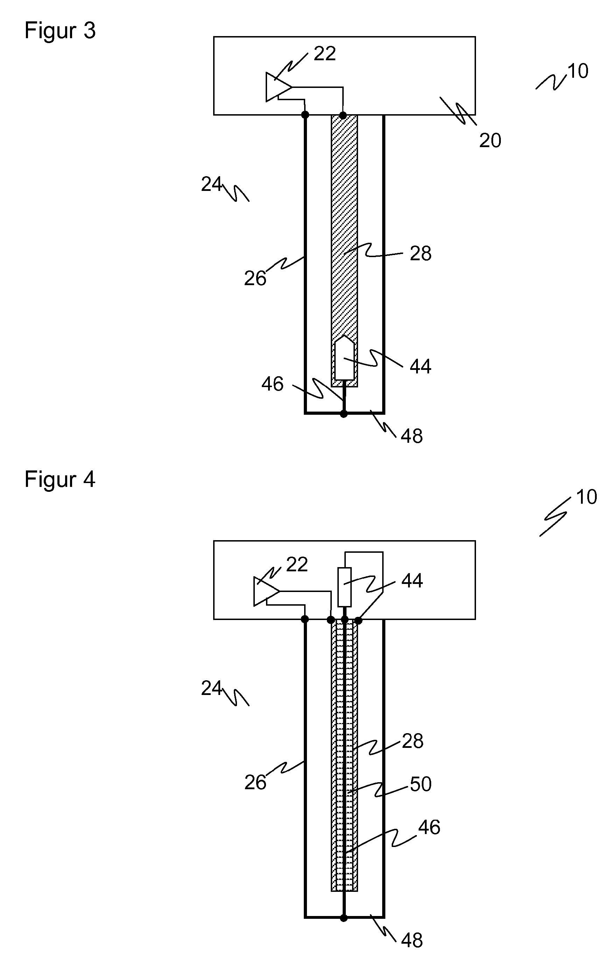

Figur 3 zeigt eine erste Ausführungsform eines Sensors 10, die nicht in den Schutzbereich der Ansprüche fällt. Dabei sind zur besseren Übersicht hier und im Folgenden die Steuerungselemente in dem Sensorkopf 20 nur ganz rudimentär als Steuerung 22 in Form eines Pulserzeugungsgenerators dargestellt. Die übrigen Elemente der Steuerung 22 sind analog der Beschreibung zu Figur 2 zu wählen.

In dem Innenleiter 28 der koaxialen Sonde 24 ist ein Abschlusswiderstand angeordnet. Die Abschlussimpedanz ist auf den Wellenwiderstand abgestimmt. Um das Messmedium 14 bei der Abstimmung zu berücksichtigen, kann entweder jeweils eine zu dem Medium 14 passende Abschlussimpedanz gewählt werden, oder man wählt als Kompromiss eine Abschlussimpedanz, welche zwar nicht genau passt, aber für eine große Breite von Medien einigermaßen geeignet ist. Der Artefaktpuls am Ende der Sonde 24 wird dann zwar nicht verhindert, aber zumindest weitgehend unterdrückt.

Die eine Seite des Widerstands 44 steht in direktem Kontakt mit dem Innenleiter 28. Die andere Seite ist beispielsweise über einen metallischen Draht 46 oder eine andere leitende Verbindung an den Außenleiter 26 angeschlossen. Der Draht 46 kann dabei aus dem gleichen Material wie der Außenleiter 26 der Sonde 24 bestehen. Die Durchführung des Drahtes 46 zu dem Widerstand 44 im Bereich des Innenleiters ist isoliert und bildet ein zumindest infinitesimales Stück eines Rückleiters für die Welle. Das Ende des Außenleiters 26 ist mit einer elektrisch leitenden Bodenplatte 48 versehen und bildet den zweiten Anschlusspunkt für den Abschlusswiderstand 44. Bei dieser Anordnung kommt nur eine minimale Anzahl von unterschiedlichen Materialien in Berührung mit dem Medium 14. Gleichzeitig sind auch sehr niedrige Füllstände bis hinab zur Oberseite der Abschlussplatte 48 messbar. Aufgrund deren geringer Dicke ist somit eine Füllstandsmessung bis in unmittelbare Nähe des Bodens des Behälters 12 möglich.

Der Außenleiter 26 und die Bodenplatte 48 sind zusätzlich mit Schlitzen oder Öffnungen versehen, durch welche das Medium 14 zu- und abfließen kann. Am unteren Ende der Sonde 24 auftretende Feldverzerrungen durch die Umlenkung auf den Widerstand 44 lassen sich mittels geeigneter Detailgestaltung einiger oder aller Leitungselemente 26, 48, 46, 44, 28 breitbandig kompensieren. Die anzuwendenden Techniken sind grundsätzlich aus der Sender- und der Antennentechnik bekannt. Zur Durchführung dieser Optimierung auf theoretischer Ebene sind auch eine Vielzahl von geeigneten Hochfrequenz-Simulationsprogrammen erhältlich.

Figur 4 zeigt als weitere Ausführungsform, die nicht in den Schutzbereich der Ansprüche fällt, eine Abwandlung, bei welcher der Widerstand 44 nicht am Ende der Sonde 24, sondern in dem Sensorkopf 20 angeordnet ist. Die Erfindung umfasst weiterhin auch alle Zwischenvarianten mit Anordnung des Widerstands irgendwo längs des Innenleiters 28 zwischen den beiden Extremsituationen der Figuren 3 und 4.

Aus Sicht des Pulses beziehungsweise der Welle ist es gleichwertig zu einem Abschlusswiderstand am unteren Ende der Sonde 24 wie in Figur 3, den Innenleiter 26 durch eine weitere Koaxialleitung mit entsprechender Impedanz zu ersetzen und diese an deren Ende auf Seiten des Sensorkopfes 20 abzuschließen. Es entsteht eine Triaxialleitung aus dem Außenleiter 26, dem Innenleiter 28 und einem im Inneren des Innenleiters angeordneten Rückleiter 46, wobei Innenleiter 28 und Rückleiter 46 eine innere Koaxialleitung bilden. Dabei ist der Innenleiter 28 weiterhin mit dem Mikrowellenempfänger 40 der Steuerung 22 verbunden, außerdem besteht aber über den Widerstand 44 eine elektrische Verbindung zwischen Innenleiter 28 und Rückleiter 46 im Sensorkopf 20. Die innere Koaxialleitung ist mit einem Material 50 gefüllt, beispielsweise mit Teflon oder einem anderen Material, vorzugsweise mit geringer relativer Dielektrizitätskonstante. Flüssigkeit kann in ihr folglich nicht aufsteigen und es sind auch keine Öffnungen in dem Innenleiter 26 für den Flüssigkeitsaustausch vorgesehen. Die Impedanz der inneren Koaxialleitung und des Widerstands 44 sind bevorzugt aufeinander abgestimmt, insbesondere in etwa untereinander gleich.

Man kann die Anordnung der Figur 4 auch so beschreiben, dass der im Innenleiter 28 angebrachte Abschlusswiderstand 44 in Figur 3 durch eine Semi-Rigid-Koaxialleitung ersetzt wird, um den Abschluss an einem günstigeren Ort im Geräteinneren platzieren zu können. Derartige Semi-Rigid-Leitungen mit einem Wellenwiderstand von beispielsweise 50 Ohm sind weit verbreitet und daher vergleichsweise kostengünstig erhältlich. Der Wellenwiderstand der inneren Koaxialleitung bleibt wegen des fest eingebauten Dielektrikums unabhängig vom Füllstand stets konstant. Somit kann die Sonde 24 immer optimal und vorhersagbar mit ihrem Wellenwiderstand abgeschlossen und ein die Messung störender Artefaktpuls vermieden werden. Man kann auch den Wellenwiderstand der äußeren Koaxialleitung, also von Außenleiter 26 und Innenleiter 28, absichtlich etwas höher wählen als diejenige des Innenleiters und den Abschlusswiderstand dann so dimensionieren, wie man dies bei einer einfachen Koaxialleitung tun würde.

Ein besonderer Vorteil der Anordnung gemäß Figur 4 ist, dass sich der Abschlusswiderstand 44 nicht im Medium 14, sondern im Sensorkopf 20 befindet und somit für einen Feinabgleich leicht zugänglich ist. Gleichzeitig ist der benötigte Bauraum am Ende der Sonde 24 minimiert.

Schließlich kann neben dem üblicherweise verwendeten Reflektionssignal nun auch das Durchgangssignal bei der Bestimmung des Füllstandes oder anderer Mediumeigenschaften als zusätzliche Messgröße herangezogen werden. Dazu muss die Steuerung 22 und deren Mikrowellenempfänger 40 beziehungsweise die Abtastschaltung in geeigneter Weise auch an den Rückleiter 46 angeschlossen werden. In einer anderen Ausführungsform ist ein zusätzlicher Mikrowellenempfänger für den Rückleiter 46 vorgesehen.

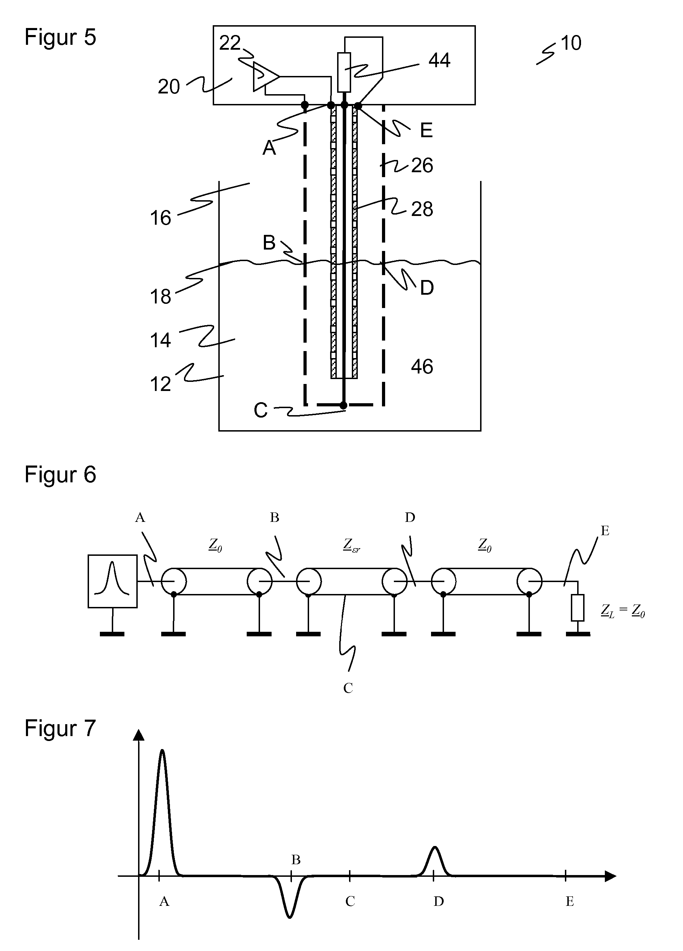

Figur 5 zeigt eine weitere Ausführungsform, die nicht in den Schutzbereich der Ansprüche fällt. Im Unterschied zu der Ausführungsform der Figur 4 ist die innere Koaxialleitung hier nicht mit einem Material 50, sondern luftgefüllt und steht wie auch der Außenleiter 26 durch Öffnungen im Austausch mit der Umgebung und dem Medium 14. Innerhalb des Innenleiters 28 ist also bei dieser Ausführungsform kein Dielektrikum vorgesehen und es ergibt sich ein offener triaxialer Aufbau. In der Praxis lässt sich bei den Ausführungsformen gemäß Figuren 3 und 4 nicht immer jede ortsfeste Fehlanpassung im Bereich des Endes der Sonde 24 vermeiden, so dass ein Artefaktpuls messbar bleibt, weshalb die an dieser Stelle reflektierten Wellen sich insbesondere bei niedrigen Füllständen dem gesuchten Füllstandssignal ungünstig überlagern und zu einem Messfehler führen können. Das Problem ist besonders ausgeprägt bei niedriger relativer Dielektrizitätskonstante $\varepsilon_r$ des Mediums 14. In den weiteren Ausführungsformen wird diese Fehlerquelle vermieden, im Falle der Ausführungsform gemäß Figur 5 mit einem vollständigen Rückleiter 46 in einer offenen Triaxialsonde.

Der Rückleiter 46 ist unten an der Sonde 24 mit dem Außenleiter 26 verbunden. Bevorzugt ist dieser Anschluss hochfrequenztechnisch kompensiert, es entstehen hier also keine Reflexpulse oder sonstigen Störeffekte.

Durch die Rückleitung der Messpulse auf dem Rückleiter 46 sind Erweiterungen des Messverfahrens ermöglicht, welche andere Messwerte zugänglich machen, die Genauigkeit der Bestimmung der Lage der Grenzfläche 18 und damit der Füllstandsbestimmung erhöhen und den Messbereich praktisch ohne Totzone bis zum Boden des Behälters 12 erweitern.

In Figur 5 sind einige Positionen im Verlauf des Pulses in der Sonde 24 mit den Buchstaben A bis E bezeichnet. Zum besseren Verständnis zeigt Figur 6 ein Ersatzschaltbild der Sonde 24 und Figur 7 einen beispielhaften Intensitätsverlauf am Einspeisepunkt des Sendesignals mit den durch die verschiedenen Grenzflächen verursachten Reflexionen, wobei jeweils dieselben Positionen mit den Buchstaben A bis E markiert sind.

Zunächst wird an Position A der relativ starke und positiv dargestellte Sendepuls ausgesandt. Er läuft bei einem Vakuumwellenwiderstand $Z_0$ zwischen Außenleiter 26 und Innenleiter 28 bis zu der Grenzfläche 18 an Position B, wo der Übergang von Luft in das Medium 14 liegt. An dieser Stelle B wird ein Teil der Sendeenergie zurückreflektiert und um 180° phasengedreht, so dass ein negativer erster Reflexpuls entsteht. Dies ist der herkömmlich bekannte Messpuls. Der verbleibende Teil pflanzt sich als fortlaufende Welle im Medium 14 nun gegenüber dem Wellenwiderstand $Z_{\varepsilon r}$ des Mediums 14 fort.

Bei guter hochfrequenztechnischer Auslegung der Sonde 24 bildet das untere Ende an Position C, dem physikalischen unteren Sondenende, für das elektrische Signal keine Störstelle, so dass sich die Welle ungestört weiter ausbreiten kann und zwischen Rückleiter 46 und Innenleiter 26 zurückgeführt wird. Erst an Position D, wenn die Welle nun von unten her auf die Grenzfläche 18 triff, kommt es zu einer weiteren Reflexion am Übergang vom Medium zu Luft. Die Amplitude dieses zweiten Reflexpulses ist prinzipiell kleiner als die des ersten Reflexpulses von Position A. Das an der Störstelle bei D verursachte Echo ist nicht phasengedreht, weil der einlaufende Puls von einem niedrigen Wellenwiderstand zu einem höheren hin übergeht und hat daher dasselbe Vorzeichen wie der Sendepuls und das umgekehrte Vorzeichen wie der erste Reflexpuls.

Der verbleibende Rest des Sendepulses läuft in dem anschließenden, mit Luft gefüllten Teil der Sonde 24 erneut bei dem Vakuumwellenwiderstand $Z_0$ zurück zu dem Sensorkopf 20. Dort bei Position E ist das Ende des Rückleiters 46 mit der optimalen Abschlussimpedanz des Widerstands 44 abgeschlossen. Deshalb wird die eintreffende Energie weitestgehend absorbiert und es gibt kein weiteres Reflexionssignal zurück zur Quelle. Analog der Darstellung in Figur 7 kann man auch den durchlaufenden Puls an Position E bestimmen, der in dem Widerstand 44 absorbiert wird.

Entgegen der Darstellung kann je nach Ausführungsform die äußere oder die innere Koaxialleitung als Einspeisepunkt für den Sendepuls gewählt werden. Dies ist ein Spezialfall der eingangs genannten prinzipiellen Vertauschbarkeit von Innenleiter 28 und Außenleiter 26, welcher in praktisch allen Ausführungsformen gegeben ist.

Für die Auswertung stehen daher je nach Ausführungsform die folgenden Pulse zur Verfügung: der erste Reflexpuls von Position B beim Übergang Luft zu Medium 14, der zweite Reflexpuls umgekehrten Vorzeichens von Position D beim Übergang Medium 14 zu Luft und der durchgehende Puls von Position E. Einen störenden Artefaktpuls bei Position C dagegen gibt es erfindungsgemäß bei entsprechend optimierter Ausgestaltung der Sonde 24 nicht, oder er ist bei verbleibenden Fehlanpassungen im unteren Bereich der Sonde 24 zumindest weitgehend unterdrückt.

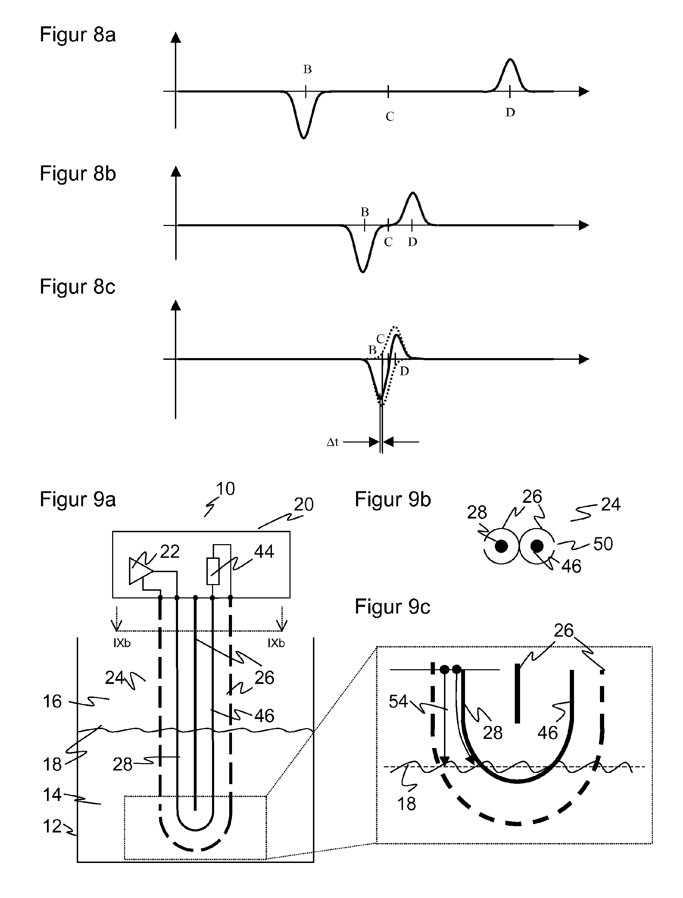

Figur 8a-c illustriert in je einem Intensitätsverlauf bei drei verschiedenen Füllständen, wie erster und zweiter Reflexpuls für eine genauere Füllstandsmessung verwendet werden können. Aus Gründen der besseren Übersicht sind die Sendepulse, die das Bezugssignal insbesondere für den Sendezeitpunkt bilden, nicht dargestellt. Diese beiden an den Störstellen B und D detektierten Reflexpulse sind allein durch die Füllstandshöhe des Mediums 14 in der Sonde 24 bestimmt.

Im Falle der Figur 8a bei höherem Füllstand sind die beiden Reflexpulse an den Positionen B und D sehr deutlich separiert und können ohne jede Schwierigkeit detektiert werden. Auch bei niedrigerem Füllstand wie in Figur 8b bleiben die beiden Reflexpulse allein aufgrund des unterschiedlichen Vorzeichens problemlos separierbar. Bei weiter sinkendem Füllstand können die Echosignale ineinander laufen und sich überlagern. Trotzdem kann auf die einzelnen Ursprungssignale zurück geschlossen werden.

Figur 8c zeigt beispielhaft einen sehr niedrigen Füllstand. Die beiden Reflexpulse haben sich gegenüber den einzelnen Pulsen (gestrichelt) so weit aneinander angenähert, dass sie sich überlagern. Es ergibt sich ein sehr steiler Nulldurchgang, welcher die Form des auszuwertenden Signals deutlich verändert. Dies muss bei der Auswertung berücksichtigt werden. Beispielsweise sind aufgrund der zeitlichen Überlagerung der beiden Reflexpulse im Summensignal die Amplituden gesunken. Diese relative Verringerung kann als Maß zur Ermittlung des Füllstandes im unteren Bereich der Sonde 24 herangezogen werden. Bei nicht angepasster Signalauswertung, also einer Messung zwischen den Amplitudenspitzen von Sende- und Reflektionssignalen, würde die Spitze des Echosignals um die Laufzeit Δt näher gemessen. Dies entspricht einem scheinbar zu nah gemessen Reflexionssignal, was gleichbedeutend mit einem zu hohen Füllstand ist.

Das Summensignal zweier überlagerter Pulse gleichen Vorzeichens in diesem geringen Abstand, wie es herkömmlich aus Messpuls und Artefaktpuls entstehen würde, wäre zu einem einzigen Summenpuls verschmolzen und überhaupt nicht mehr separierbar. Die erfindungsgemäße Auslegung der Sonde 24 führt deshalb zu einer deutlich verbesserten zeitlichen Separierung, als dies mit dem Restartefaktpuls des herkömmlichen notwendig nicht optimal anpassbaren Abschlusswiderstands möglich wäre.

Schließlich ist auch die Verschmelzung der beiden Reflexpulse, wie sie in Figur 8c dargestellt ist, durch die verlangsamte Ausbreitungsgeschwindigkeit zwischen den Positionen B und D entschärft. Grund dafür ist, dass das Medium 14 über seine relative Dielektrizitätskonstante Wert sowohl den wirksamen Wellenwiderstand als auch die Ausbreitungsgeschwindigkeit der elektrischen Welle beeinflusst. Bei einer Koaxialleitung gilt:

$$v_\varepsilon = \frac{c_0}{\sqrt{\varepsilon_r}}$$

mit:

$v_\varepsilon$: Ausbreitungsgeschwindigkeit im Medium
$c_0$: Lichtgeschwindigkeit
$\varepsilon_r$: Dielektriziätskonstante des Mediums

Praktisch führt dies dazu, dass sich die Laufzeit des Pulses zwischen den Übergängen B und D an der Grenzfläche 18 merklich erhöht und so die beiden Reflexpulse zeitlich voneinander separiert.

Der zweite Reflexpuls ist also nicht wie der Artefaktpuls ein Störsignal. Er trägt im Gegenteil die Mes

sinformation redundant noch einmal in sich. Selbst wenn man ihn nur als Störsignal auffassen wolle, bliebe zumindest sicher gestellt, dass seine Amplitude immer kleiner ist als diejenige des ersten Reflexpulses. Dieser Artefaktpuls wäre also wesentlich kleiner, quasi ein an das Medium 14 angepasster Abschlussreflexpuls. Es ist weiter sichergestellt, dass das erste und das zweite Echo entgegengesetzte Vorzeichen haben, wodurch die Separierung prinzipiell und algorithmisch erheblich vereinfacht ist. Bei sinkendem Füllstand wandern die beiden Reflexpulse aufeinander zu. Bei sehr niedrigem Füllstand können die beiden Reflexpulse ineinander laufen, wobei das dafür erforderliche Niveau noch davon abhängt, wie niedrig die relative Dielektrizitätskonstante des Mediums 14 ist. Sie bleiben dann aber weiterhin separabel.

Als weitere Mess- oder Korrekturgröße kann auch die Durchlaufzeit vom Sender 38 bei Position A bis zum Abschlusswiderstand 44 bei Position E herangezogen werden. Wegen der im Bereich zwischen B und D durch das Medium 14 verzögerten Laufzeit ist diese Durchlaufzeit um einen Wert verzögert, welcher abhängig von der relativen Dielektrizitätskonstanten des Mediums 14 proportional dem Füllstand ist. Mit Medium 14 innerhalb der Sonde 24 ist die Durchlaufzeit deshalb auch immer größer als bei leerer Sonde 24 beziehungsweise leerem Behälter 12 und nähert sich mit zunehmend leerem Behälter 12 dem der Durchlaufzeit bei leerer Sonde 24 an. Die Durchlaufzeit bei leerer Sonde 24 kann als Bezugs- oder bzw. Referenzgröße dienen. Dieser Wert ist mechanisch bestimmt und entweder im Voraus bekannt oder durch eine Kalibrierungsmessung bei leerem oder ohne Behälter 12 ohne weiteres bestimmbar.

Es sind eine Reihe weiterer Messverfahren vorstellbar. Dabei ist algorithmisch allenfalls die Bestimmung der Pulslagen aufwändig. Es ist dann ohne großen Zusatzaufwand möglich, mehrere der hier beschriebenen Verfahren kumulativ anzuwenden und gegeneinander zu plausibilisieren oder gemeinsame Messwerte statistisch zu ermitteln.

Einen ersten Messwert für den Füllstand liefert die bekannte Auswertung der Laufzeit des ersten Reflexpulses. Mit Hilfe des zweiten Reflexpulses ist wie oben zu Figur 8 beschrieben eine von Artefakten ungestörte erweiterte Auswertung möglich. Bei bekannter relativer Dielektrizitätskonstante kann auch aus der Lage des zweiten Reflexpulses allein der Füllstand bestimmt werden. Unter derselben Voraussetzung kann der Füllstand auch der Laufzeitdifferenz zwischen erstem Reflexpuls und zweitem Reflexpuls entnommen werden. Schließlich liefert wiederum unter der Voraussetzung einer bekannten relativen Dielektrizitätskonstanten auch die Durchlaufzeit einen Messwert für den Füllstand. Bei all diesen Verfahren kann der Sendepuls den Bezug bilden.

Die Länge der Sonde bestimmt sich aus der Durchlaufzeit bei leerem Behälter 12. Die Durchlaufzeit bei bekanntem Füllstand liefert aus relativ einfachen mathematischen Zusammenhängen die relative Dielektrizi

tätskonstante. Daraus kann, bis auf Mehrdeutigkeiten bei gleicher relativer Dielektrizitätskonstante, sogar die Art des Mediums 14 im Klartext benannt werden, sofern eine Tabelle mit möglichen Medien 14 und zugehörigen Dielektrizitätskonstanten hinterlegt ist. Die relative Dielektrizitätskonstante kann ebenso aus dem Abstand der beiden Reflexpulse untereinander ermittelt werden.

Es wird nicht nur die Lage des Schwerpunkts oder Extremums der Pulse beeinflusst, sondern auch die Pulsform zumindest hinsichtlich Vorzeichen und Amplitude. Auch die Pulsform kann deshalb neben der Pulslage für die Messung herangezogen werden. Dies ist etwas aufwändiger und setzt zumeist Kenntnis der Ausgangs-Pulsformen voraus. Diese wiederum lässt sich mit Hilfe des Durchgangssignals recht einfach ermitteln. Weiterhin kann sich die Laufzeitmessung neben dem Extremum des Pulses auf jedes andere Charakteristikum beziehen, welches sich mathematisch extrahieren lässt.

Soweit in den soeben angegebenen Möglichkeiten eine Messung nur in Abhängigkeit einer anderen möglich ist, also beispielsweise die Messung des Füllstands in einigen Verfahren nur unter Voraussetzung einer bekannten relativen Dielektrizitätskonstanten, so können diese Größen entweder vorgegeben oder in Einlern-/Eichmessungen vorab bestimmt werden. Beispielsweise misst man zunächst die Länge der Sonde 24 bei leerem Behälter, füllt diesen dann voll, misst erneut für die relative Dielektrizitätskonstante und kann anschließend Füllstände messen.

Da nicht alle Verfahren für die Bestimmung des Füllstands die Kenntnis der relativen Dielektrizitätskonstanten verlangen, kann man sich in einer Art Bootstrap-Initialisierung iterativ sowohl den Füllstand als auch die Dielektrizitätskonstante erschließen, indem man zunächst nur die von der Dielektrizitätskonstanten unabhängigen Verfahren für die Füllstandshöhe einsetzt, mit diesem möglicherweise noch ungenauen Füllstand die Dielektrizitätskonstante schätzt, daraus wieder den Füllstand und so weiter, bis eine geforderte Genauigkeit erreicht ist. Alternativ beginnt man mit einem plausiblen, aber ohne Kenntnis des tatsächlichen Mediums 14 oder dessen Füllstand festgelegten Anfangswert, misst damit die abhängigen Größen und korrigiert iterativ den Anfangswert.

Man könnte sogar die aktuelle Dielektrizitätskonstante schätzen und damit einen Abschlusswiderstand am unteren Ende der Sonde 24 dynamisch anpassen, welcher bevorzugt wie in Figur 3 innerhalb des Innenleiters 28 angeordnet ist, aber auch wie bekannt außen angeordnet sein kann. Nach einer kurzen Kalibrierungsphase für diesen Abschlusswiderstand könnte man dann mit einer perfekt abgestimmten einfachen Koaxialsonde 24 arbeiten.

Die zu den Figuren 5 bis 8 beschriebenen Erweiterungen, Verfahren und Vorteile lassen sich auch mit anderen Formen der Sonde 24 verwirklichen. Während in den bisher beschriebenen Ausführungsformen eine Triaxialleitung verwendet wird, zeigt Figur 9a eine Ausführungsform mit einer U-förmig gebogenen Koaxialleitung, die nicht in den Schutzbereich der Ansprüche fällt. Dabei geht also der Innenleiter 28 U-förmig in den Rückleiter 46 über, während beide von dem ebenfalls U-förmig gebogenen Außenleiter 26 umgeben sind. Figur 9b zeigt die Sonde 24 noch einmal im Querschnitt. Dabei sind die mehrfach angesprochenen Öffnungen 50 für den Austausch mit dem Medium 14 erkennbar.

Die Realisierung der Sonde 24 als U-förmige Koaxialleitung hat den Vorteil, dass Hin- und Rückleitung in gleichen Dimensionen aufgebaut und damit in einer besonderen Ausführungsform sogar einstückig herstellbar sind. Die offensichtliche Symmetrie lässt die reflexionsarme Ausgestaltung des unteren Endes der Sonde 24 deutlich erkennen, auch wenn dies hochfrequenztechnisch bei einer Triaxialleitung nahezu genauso gut erreichbar ist.

Anhand einer Ausschnittsvergrößerung des unteren Bereichs der Sonde 24 gemäß Figur 9c wird noch ein weiterer positiver Effekt erläutert. Die sich ausbreitende Welle, deren Richtung durch Pfeile 54 angedeutet ist, wird in ihrer Laufzeit verzögert, während sie sich durch das Medium 14 bewegt. Die U-förmige Gestalt der Sonde 24 sorgt für einen Teil der Laufstrecke, welcher zumindest im Wesentlichen horizontal orientiert ist und sich auch noch bei niedrigen Füllständen innerhalb des Mediums 14 erstreckt. Diese horizontale Laufstrecke ist unabhängig vom Füllstand und separiert daher den ersten von dem zweiten Reflexpuls, so dass deren Auswertung erheblich vereinfacht wird.

Die dargestellte Ausführung des Endes der Sonde 24 führt somit auch zu einer eleganten Teilkompensation des in Figur 8c dargestellten Messfehlers bei niedrigem Füllstand. Je weiter der Füllstand absinkt, umso mehr überlagern sich erster und zweiter Reflexpuls. Infolge dessen steigt der Messfehler, bezogen auf den wahren Füllstand, immer weiter an. Das Echo wird zunehmend mit einer entsprechend wachsenden Laufzeit Δt zu nah gemessen, wie in der Figur 8c gezeigt. Indem aber gleichzeitig die kreis- oder parabelähnliche Ausgestaltung des Endes der Sonde 24 für das Messsignal zu einer Wegverlängerung bis zur Grenzfläche 18 führt, ist bei guter Auslegung der Gesamtgeometrie zumindest eine teilweise Kompensation der beiden Messfehler durch die Überlagerung der beiden beschriebenen Effekte gegeben. Das vereinfacht die Auswertung erheblich.

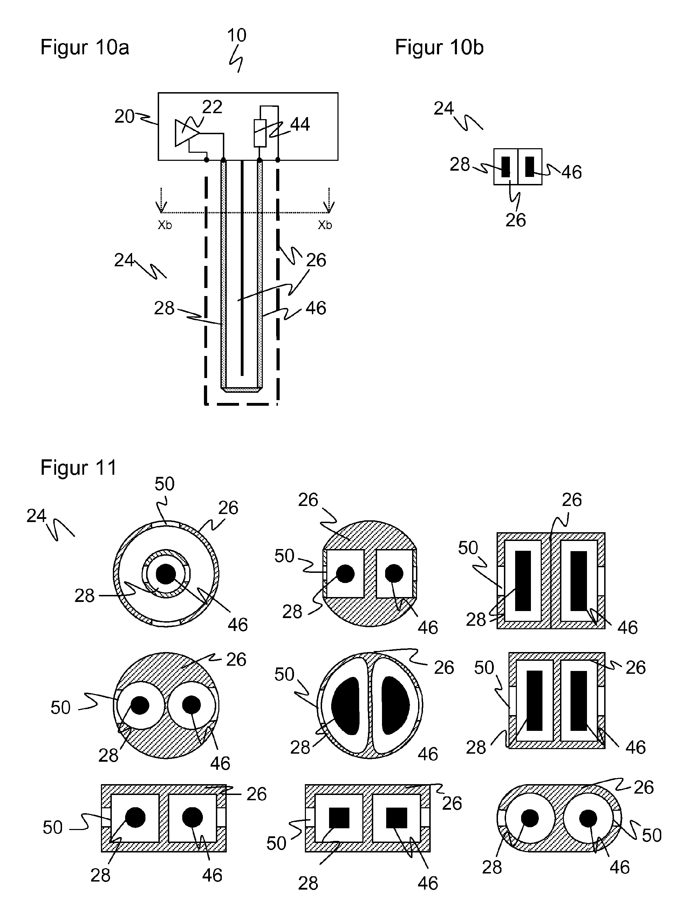

Ein ähnlicher Effekt ist natürlich auch mit anderen Geometrien des Verbindungsbereichs am unteren Ende der Sonde 24 möglich als der dargestellten U-Form. Figur 10a zeigt eine weitere Ausführungsform, die nicht in den Schutzbereich der Ansprüche fällt, mit einer eckigen Ausgestaltung, während Figur 10b die zugehörigen eckigen Leiter im Querschnitt darstellt. Diese Form der Sonde 24 hat auch fertigungstechnische Vorteile. Die Ecken können hochfrequenztechnisch kompensiert sein, um nicht ihrerseits Störstellenreflexe zu erzeugen. Im unteren Verbindungsbereich der Sonde 24 gemäß Figur 10 ergibt sich bereits aufgrund der physikalischen Länge der horizontalen Abschnitte eine verbesserte Separierung der Pulsreflexe. Man kann diesen Effekt noch verstärken, indem man zusätzlich zumindest in Teilbereichen dieses Verbindungsbereichs einen oder mehrere Abstandshalter mit einer relativ hohen Dielektrizitätskonstanten einbringt, um den zweiten Pulsreflex weiter zu verzögern und damit zu separieren. Die zusätzliche Laufzeitdifferenz kann durch Kalibrierung oder Einlernen bei den Messungen berücksichtigt werden.

Ebenso wie die Form der Sonde 24 variiert werden kann und neben den beiden in Figuren 9 und 10 dargestellten runden und eckigen U-Formen zumindest prinzipiell auch andere Geometrien annehmen kann, etwa eine V-Form oder dergleichen, so ist auch eine Vielfalt von Querschnitten der Sonde 24 denkbar, von denen Figur 11 eine Auswahl zeigt. Oben links ist eine Variante der Triaxialleitung gezeigt, die übrigen Querschnitte zeigen unterschiedliche Ausführungsformen von jeweils zwei verbundenen Koaxialsystemen mit Hin- und Rückleitung. Die dargestellten Öffnungen, Bohrungen oder Schlitze 50 sind wie immer nur beispielhaft und auch in anderer Position, Größe, Form und Anzahl denkbar.

Jede der gezeigten Varianten bringt bestimmte Vorzüge mit sich. Rundmaterial für Innenleiter 28 und Rückleiter 46 beispielsweise ist besonders vorteilhaft, weil es hier zu keiner Feldkonzentration kommt. Eckige Leiter sind leichter herstellbar. Mit komplizierteren Leiterformen kann man die Feldlinienkonzentration steuern, damit das Medium 14 und nicht sonstige Einflüsse die Störstellen bestimmen und daher besonders genaue Messungen möglich werden. Die oben gezeigten rechteckigen und quadratischen Hohlprofile für die Außenleiter sind bevorzugt aus einem Stück gefertigt, können aber auch aus zwei standardisierten, kostengünstigen Profilstangen zusammengesetzt werden. Alle gezeigten Profile können auch aus mehreren Teilprofilen zusammengesetzt sein.

Zur Vermeidung von Anbackungen oder Ablagerungen sollten an jeder Stelle der Sonde 24 scharfe Kanten und Grate vermieden werden. Das Trommeln der Einzelteile ist eine Möglichkeit, diese Forderung zu erfüllen.

Die hier dargestellte Formenvielfalt ist auf weiter oben oder weiter unten beschriebene Ausführungsformen analog übertragbar.

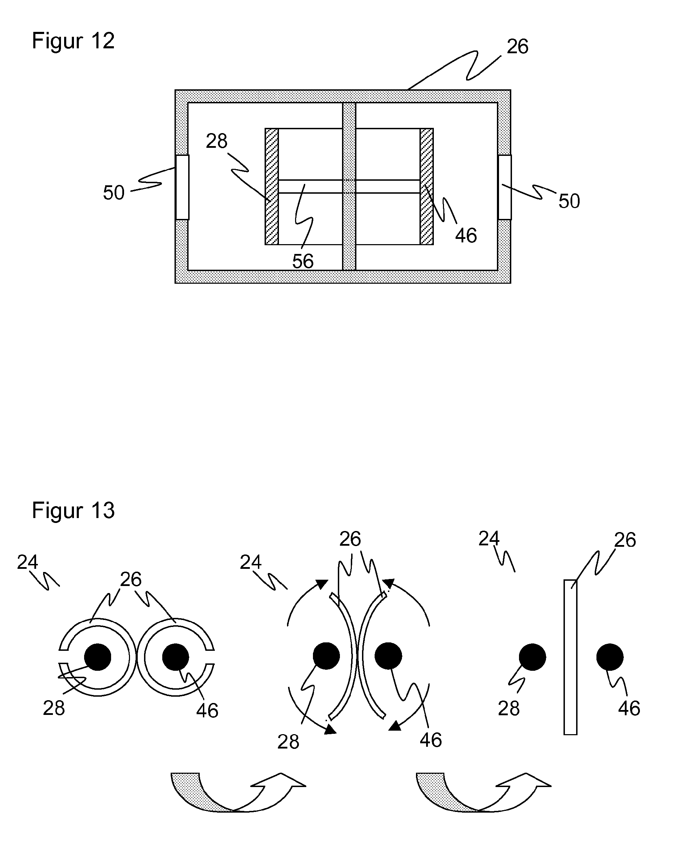

Figur 12 zeigt ein Abstandselement für die Sonde 24. Damit können die Leiter voneinander elektrisch isoliert und im richtigen Abstand gehalten werden. Als Gegenstück für ein Abstandselement im Bereich des unteren Endes der Sonde 24 kann für hinreichend starre und nicht allzu lange Sonden 24 der Prozessanschluss im Sensorkopf 24 genügen. Optional werden im Verlauf der Sonde weitere Abstandshalteelemente eingesetzt, welche dann vorteilhaft einkalibriert werden, um die künstlich eingeführten Laufzeitunterschiede durch die endlichen Dielektrizitätskonstanten zu kompensieren.

Das Beispiel gemäß Figur 12 ist ein Abstandshalter für eine Anordnung mit rechteckigem Innenleiter 28 und Rückleiter 46. Das eigentliche Abstandshalteelement 56 weist ein isolierendes Material wie Teflon auf. Entsprechend abgewandelte Formen für die verschiedenen Querschnittsvarianten, wie beispielhaft in Figur 11 gezeigt, sind denkbar.

Die bisher beschriebenen Ausführungsformen mit geschlossener Bauweise haben den Nachteil, dass die Innenräume schlecht zu reinigen sind. Offene Bauformen sind unter diesem Aspekt bevorzugt. Allerdings ist mit offenen Bauformen nicht einfach eine offene Einzelsonde gemeint, da diese große messtechnische Probleme hat. Die Vorteile einer geschlossenen Sonde hinsichtlich genauer und unabhängiger Messverfahren und die Vorteile einer offenen Sonde hinsichtlich Zugänglichkeit und Reinigung lassen sich vereinen.

Figur 13 illustriert in schematischen Querschnittsdarstellungen den Übergang einer geschlossenen, auf koaxialen Leitungen beruhenden Sonde 24 zu einer offenen Anordnung von Innenleiter 28, Rückleiter 46 und gemeinsamem Bezugsleiter 26, wobei letzterer für die Welle das Äquivalent des Außenleiters 26 darstellt. Dazu wird, wie in den drei Bildern der Figur 13 gezeigt, der Außenleiter 26 einer koaxial ausgeführten Sonde 24 quasi aufgeschnitten und aufgebogen und geht in einen im Querschnitt rechteckigen Bezugsleiter 26 über. Dieser Bezugsleiter 26 sorgt außer für die Wellenführung auch für eine Entkopplung beziehungsweise Schirmung zwischen Innenleiter 28 und Rückleiter 46.

Es ergibt sich demnach, wie rechts in der Figur 13 gezeigt, ein hier beispielhaft plattenförmiger Bezugsleiter 26 für die nun offen liegenden Innenleiter 28 und Rückleiter 46. Der Bezugsleiter 26 sollte vorteilhaft so geformt sein, dass er sowohl dem Innenleiter 28 wie dem Rückleiter 46 eine in der Querschnittsbetrachtung flache oder konvexe Außenkontur zuwendet, damit die Welle zur Ausbildung eines tatsächlichen Bezugs zwischen Innenleiter 28 und Rückleiter 46 geführt wird. Jedenfalls sollte der Bezugsleiter so geformt sein, dass seine Außenkontur sowohl für den Innenleiter 28 wie auch für den Rückleiter 46 einen effektiven und zumindest einigermaßen gleichwertigen Bezug bildet. Ebenso sollte er vorzugsweise eine hinreichende räumliche Ausdehnung senkrecht zur Verbindungslinie zwischen den Achsen von Innenleiter 28 und Rückleiter 46 aufweisen, also in der Figur 13 eine ausreichende Höhe, um eine Kopplung zwischen Innenleiter 28 und Rückleiter 46 zumindest weitestgehend bis zu einer vernachlässigbaren Kopplungsstärke zu unterdrücken. Obwohl die Anordnung offen in dem Sinne ist, dass Innenleiter 28 und Rückleiter 46 aus einer Radialrichtung von außen zugänglich sind, sorgt der Bezugsleiter wie bei einer geschlossenen Sonde 24 in weiten Grenzen für Unabhängigkeit von Material und Geometrie des Behälters 12 sowie des Einbauortes des Sensors 10.

Der Bezugsleiter 26 kann wie in Figur 13 ein gemeinsamer Bezugsleiter für Innenleiter 28 und Rückleiter 46 sein. In den oben beschriebenen Ausführungsformen war alternativ je ein Bezugsleiter für Innenleiter 28 und Rückleiter 46 vorgesehen, nämlich die jeweiligen Außenleiter 26. Entsprechend ist auch bei einer Anordnung gemäß Figur 13 möglich, weitere Bezugsleiter vorzusehen, etwa zusätzliche Bezugsleiter außen oder mehrere mittige Bezugsleiter, oder von der mittigen Anordnung abzuweichen. Dabei sollte aber beachtet werden, dass die Bezugsleiter den Innenleiter 28 und den Rückleiter 46 hinreichend voneinander abschirmen.

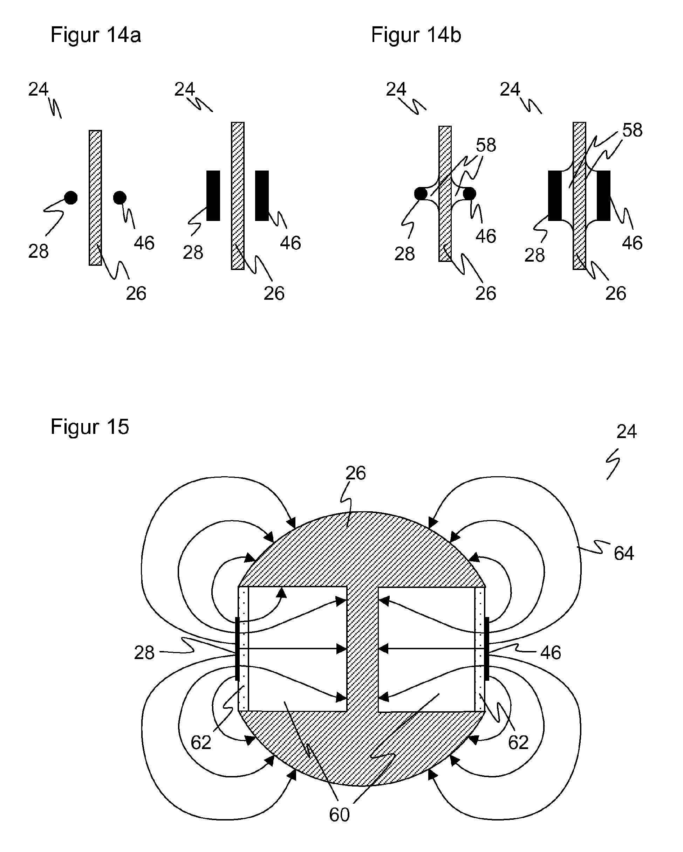

Figur 14 zeigt einige Varianten einer Sonde 24, wie sie durch den schematischen Vorgang gemäß Figur 13 entstehen. Die Variante links in Figur 14a entspricht derjenigen rechts in Figur 13. Links in Figur 14a werden ein eckiger statt eines runden Innenleiters 28 beziehungsweise Rückleiters 46 eingesetzt. Die Erfindung ist nicht auf diese Querschnittsgeometrien beschränkt, Figur 11 gibt eine Vorstellung der möglichen weiteren Formen, wenn man den Außenleiter 26 jeweils in analoger Weise zu einem Bezugsleiter 26 öffnet.

Die offene Bauweise ermöglicht eine einfache und effektive Reinigung der Sonde 24. Zur Vermeidung von Kurzschlüssen zwischen den Leitern müssen jedoch in regelmäßigen Abständen Abstandhalter, sogenannte Spacer, vorgesehen werden, um die Beabstandung sicherzustellen. Im Bereich der Lebensmittelapplikationen sind derartige Spacer problematisch, weil sich die Spalten und Ecken nicht im erforderlichen Maße reinigen lassen. Zusätzlich könnten die Kleinteile verloren gehen und das Medium 14 verunreinigen. Deshalb werden in alternativen Ausführungsformen der Sonde 24, von denen in Figur 14b zwei Varianten im Querschnitt gezeigt sind, Innenleiter 28 und Rückleiter 46 über einen längs der Sonde 24 geführten Trägerkunststoff 58 durchgängig mit dem Bezugsleiter 26 verbunden. Ein abgerundetes Profil dieser Trägerkunststoffe 58 vereinfacht die Reinigung der Sonde 24.

Der Trägerkunststoff 58 führt in einem gewissen Maße zu einer Verdichtung des elektrischen Feldes und beeinflusst so den messbaren Wellenwiderstand der Sonde 24. Um trotzdem einen durch das Medium 14 an der Grenzfläche 18 verursachten Impedanzsprung messen zu können, sollte der Luftfeldanteil maximiert werden. Das ist gleichbedeutend mit einer Minimierung der wirksamen relativen Dielektrizitätskonstanten $\varepsilon_r$ bei leerer Sonde 24 und lässt sich durch Kunststoffe mit möglichst geringer relativer Die-lektrizitätskonstante $\varepsilon_r$ erreichen. Wie schon mehrfach an anderen Stellen gesagt, eignen sich beispielsweise Teflon und ähnliche fluorbasierte Kunststoffe mit $\varepsilon_r = 2{,}1$ gut, und sie können gleichzeitig auch effektiv und einfach gereinigt werden.

Figur 15 zeigt den Querschnitt einer weiteren Ausführungsform einer Sonde 24, die nicht in den Schutzbereich der Ansprüche fällt, in einer Art Verbundbauweise, welche die zu den Figuren 13 und 14 beschriebenen Ideen weiterentwickelt. Der Bezugsleiter 26 ist hier wiederum ein gemeinsamer Bezugsleiter, obwohl erneut denkbar ist, stattdessen mehrere Bezugsleiter vorzusehen. Der Bezugsleiter 26 weist einen Metallkern auf, in dem längsgeführte Aussparungsnuten 60 vorgesehen sind. Diese Aussparungsnuten 60 werden durch nicht metallische Träger 62 geschlossen, so dass sich insgesamt eine konvexe, bevorzugt annähernd kreisförmige Außenkontur der Sonde 24 ergibt. Innenleiter 28 und Rückleiter 46 sind als leitende Streifen auf den Trägern 62 ausgeführt. In einer Ausführungsform sind die Träger 62 Leiterplatten und Innenleiter 28 beziehungsweise Rückleiter 46 sind als Leiterbahnen beziehungsweise Microstrip aufgedruckt.

Die Innenseite der bevorzugt dünnen Träger oder Leiterkarten 62 ist nicht metallisiert und liegt über dem luftgefüllten Innenraum der Aussparungsnuten 60. Dadurch ist die wirksame relative Dielektrizitätskonstante $\varepsilon_r$ in diesem Bereich sehr niedrig. Viele der Feldlinien 64 finden daher ihren Weg zu dem Bezugsleiter 26 von dessen Außenseite her durch den freien Raum. Sobald ein Medium 14 die Außenseite der Sonde 24 umspült, nehmen die Feldlinien 64 bevorzugt den Weg durch das Medium 14. Das führt zu einer messbaren Änderung im Wellenwiderstand und damit zu den ersten und zweiten Reflexpulsen an der Grenzfläche 18.

Besonders vorteilhaft ist die sich ergebende runde Querschnittsform der Sonde 24. Zum zusätzlichen Schutz kann diese mit einem Schrumpfschlauch aus Teflon oder einem ähnlichen Material überzogen werden. Damit werden fertigungstechnisch verbleibende Verunreinigungen und Unebenheiten ausgeschaltet, es ergibt sich eine einheitliche und leicht zu reinigende Oberfläche, womit die Sonde 24 ideal im Lebensmittelbereich einsetzbar ist.

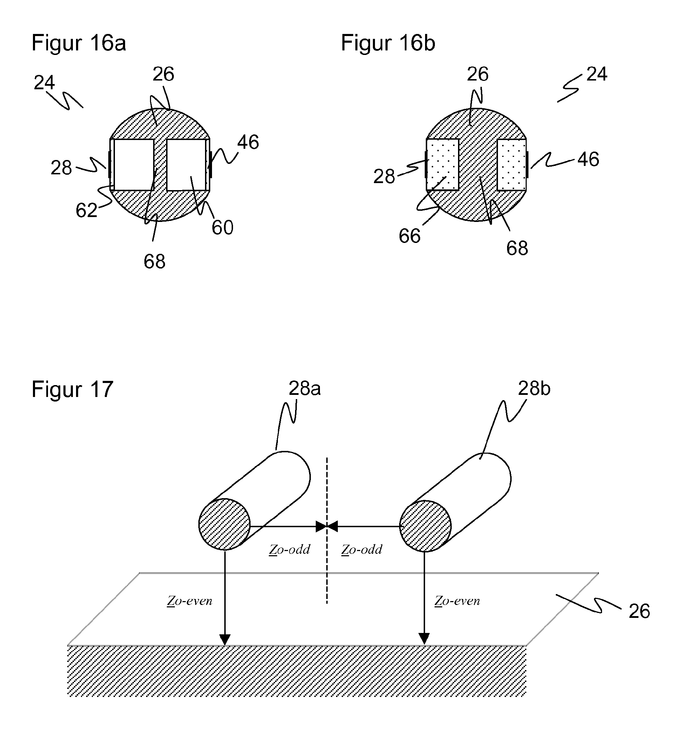

In Figur 16a wird die Ausführungsform gemäß Figur 15 noch einmal vereinfacht dargestellt und einer weiteren Ausführungsform gemäß Figur 16b gegenübergestellt. Die luftgefüllten Aussparungsnuten 60 gemäß Figur 16a könnten bei größeren Außendrücken, also Druckunterschieden zwischen der Messumgebung und den durch die Aussparungsnuten 60 entstehenden Luftkammern in der Sonde 24, zu Wölbungen oder gar Brüchen der Träger 60 führen und damit den Einsatz des Sensors 10 in einigen Anwendungen verhindern.

In der Ausführungsform gemäß Figur 16b sind deshalb die Aussparungsnuten 60 ausgefüllt, beispielsweise mit einem Kunststoff niedriger relativer Dielektrizitätskonstante. Innenleiter 28 und Rückleiter 46 können zur einfachen Fertigung direkt auf den Kunststoff aufgebracht werden, beispielsweise als Flexprint auf Teflon. Diese Anordnung ist etwas weniger sensitiv, weil der Kunststoff den Wellenwiderstand näher an denjenigen Wellenwiderstand bei umgebendem Medium 14 heranführt und daher der Sprung an der Grenzfläche 18 etwas geringer ausfällt. In den meisten Anwendungen, besonders wenn die relative Dielektrizitätskonstante des Mediums 14 nicht allzu gering ist, bedeutet dies für die Praxis aber keine Einschränkung. Die Stärke der Zwischenwand 68 des Bezugsleiters zwischen den Aussparungsnuten 60 des Bezugsleiters 26 kann variiert werden.

Figur 17 erläutert das Prinzip der differentiellen Ansteuerung am Beispiel eines Doppelleitersystems mit zwei Leitern 28a, 28b und einem Bezugsleiter 26. Dabei kann ein Signal auf den beiden Leitern 28a, 28b im Gegentakt mit entgegengesetztem Vorzeichen oder im Gleichtakt mit gleichem Vorzeichen laufen. Üblicherweise wird das Messsignal im Gegentakt eingespeist. So wird die Sonde 24 in EMV-kritischen Anwendungen sehr robust gegenüber Feldeinstrahlungen externer Störer, die meist im Gleichtakt einkoppeln. Die Sonde 24 ist aber so ausgelegt, dass sie mit beliebigen Messsignalen und Störern sowohl im Gegentakt als auch im Gleichtakt umgehen kann.

Bei Gleichtaktansteuerung der Leitungen tritt kein Potentialunterschied zwischen den Signalleitern 28a und 28b auf. Die Kopplung zwischen ihnen ist nicht wirksam. In diesem Fall ist nur der Wellenwiderstand der einzelnen Leiter gegenüber dem Bezugsleiter definiert. Dieser heißt Gleichtakt-Wellenwiderstand Zo,even.

Bei Gegentaktansteuerung wirkt dagegen die Kopplung zwischen den Signalleitern 28a und 28b maximal. In diesem Fall bilden die Signalleiter 28a, 28b ein eigenständiges Leitungssystem, welches wiederum unabhängig optimal abgeschlossen werden kann. Aus Symmetriegründen ist der Gegentakt-Wellenwiderstand von den Einzelleitern 28a, 28b aus hin zur dazwischen liegenden, durch eine gestrichelte Linie angedeuteten Symmetrieebene definiert. Er wird allgemein Zo,odd genannt.

Aus dieser Sicht lassen sich die Prinzipien zur Auslegung der optimalen Abschlussimpedanzen ableiten. Durch geeignete Dimensionierung ist es nämlich möglich, das Leitungssystem gleichzeitig bezüglich Gleichtakt- und Gegentaktanregung optimal angepasst abzuschließen und somit Artefaktpulse zu vermeiden.

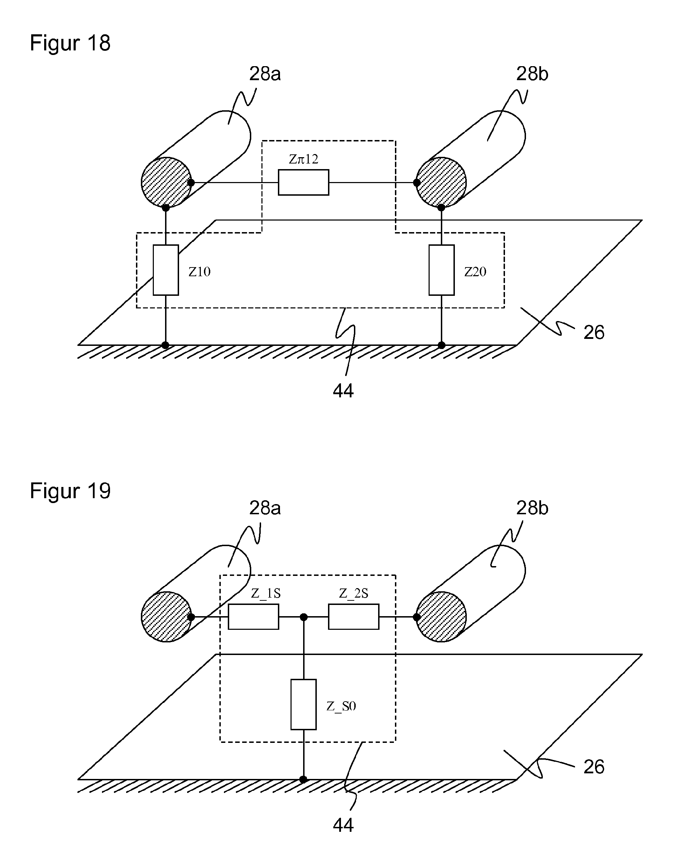

Dabei lassen sich zwei grundsätzlich gleichwertige Varianten angeben, die in den Figuren 18 und 19 dargestellt sind. Mit Hilfe der sogenannten Stern-Dreieck-Transformation können die Bauteilwerte von einer Anordnung in die andere, elektrisch völlig gleichwertige Variante, überführt werden. Selbstverständlich ergeben sich dann für die einzelnen Bauelemente unterschiedliche Werte.

In einer π-Anordnung oder Dreiecksanordnung gemäß Figur 18 werden die beiden Leiter 28a, 28b gegenüber dem Bezugsleiter 26 mit jeweils einem Element mit einem Wellenwiderstand Z10 beziehungsweise Z20 verbunden, wobei die Beziehung Z10=Z20=Zo,even gilt. Außerdem werden die Leiter 28a, 28b untereinander mit einem Wellenwiderstand Zπ12 verbunden, für den die folgende Beziehung erfüllt ist:

$$Z\pi 12 = \frac{2*Zo,even*Zo,odd}{Zo,even - Zo,odd}.$$

In einer T-Anordnung oder Sternanordnung gemäß Figur 19 werden die Leiter über einen zentralen gemeinsamen (Stern)punkt verbunden, und zwar von dem ersten Leiter 28a mit einem Wellenwiderstand Z_1S, von dem zweiten Leiter 28b mit einem Wellenwiderstand Z_2S und von dem Bezugsleiter 26 mit einem Wellenwiderstand Z_S0. Dabei gelten die Beziehungen Z_1S=Z_2S=Zo,odd sowie Z_S0=(Zo,even-Zo,odd)/2.

Abweichend von der Verwendung der optimal angepassten Leitungsabschlüsse für sowohl Gleichtakt- wie Gegentaktansteuerung kann unabhängig für jeden einzelnen der angegebenen Wellenwiderstände eine beliebig abweichende komplexe Impedanz gewählt werden, um ein vorteilhaftes Verhalten beim gerade gewählten Auswerteverfahren zu erreichen. Beispielsweise könnten in einer π-Anordnung gemäß Figur 18 die Leitungen 28a, 28b mit den Impedanzen Z10 = Z20 = Zo,even optimal angepasst abgeschlossen sein, um eingekoppelte Gleichtakt-Störenergien zu absorbieren. Zπ12 könnte aber gleichzeitig als reine Induktivität ausgelegt sein, um für das Messsignal eine Laufzeitverzögerung und damit virtuelle Verlängerung der Sonde 24 über ihr Ende hinaus zu erreichen.

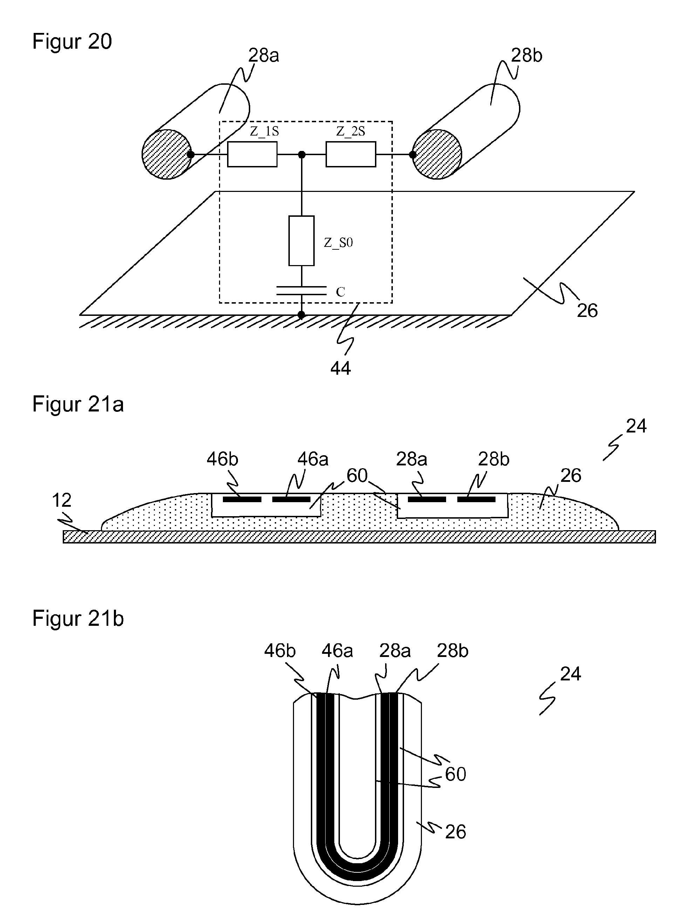

In Figur 20 ist eine Ausführungsform gezeigt, bei der zusätzlich eine DC-Entkopplung zum Bezugsleiter 26 hin vorgesehen ist. Diese lässt sich analog nicht nur wie dargestellt mit der Dreieckesanordnung gemäß Figur 18, sondern auch mit der Sternanordnung gemäß Figur 19 realisieren.

Der zusätzliche Kondensator C bewirkt ein Hochpassverhalten. Diese galvanische Trennung verhindert das Fließen eines DC-Stromes über die Einzelleiter 28a, 28b zum Bezugsleiter 26 hin. Auf diese Weise lässt sich die Sonde 24 galvanisch von der Auswerteelektronik oder dem Bezugsleiter 26 trennen. Häufig ergibt sich diese Forderung aus der gewählten Geräte-Schutzklasse. Gleichzeitig lässt sich so die Verlustleistung in den Treiberschaltungen minimieren. Eine entsprechende galvanische Trennung kann auch auf der Einspeiseseite an geeigneter Stelle vorgenommen werden. Hier sind serielle Trennkondensatoren genauso denkbar wie die Verwendung eines Übertragers (Balun).

Durch geeignete Auslegung der Abschlussimpedanzen können jeweils im gewählten Auswerteverfahren vorteilhafte Eigenschaften, wie beispielsweise Dämpfungen, Signalüberhöhungen, Verzögerungen erreicht und genutzt werden. Jedes der einzelnen Abschlusselemente kann folglich als eine rein reelle, rein imaginäre oder eine beliebige komplexe Abschlussimpedanz mit entsprechendem Verhalten über der Frequenz realisiert werden.

Dabei kann die Abschlussimpedanz sowohl aus einzelnen als auch einer Vielzahl von konzentrierten Bauelementen wie Widerständen oder verteilten Bauelementen wie gedruckte Flächenwiderstände, gedruckte Transformations- oder Verzögerungsleitungen und ähnlichem bestehen. Weitere Beispiele sind Kurzschluss, Leerlauf, kapazitives Element, induktives Element oder reeller Widerstand. Solche Elemente weisen die geforderte Eigenschaft selbstverständlich gezielt auf, also in höherem Maße als die intrinsischen und unvermeidlichen Leitungseigenschaften, wobei aber schon eine Leitungsverlängerung zur Erhöhung derartiger intrinsischer Eigenschaften genügen kann. Auch die an das Leitungssystem angeschlossenen Eingangs- und/oder Ausgangsimpedanzen aktiver Schaltungen können die Rolle des Abschlusses 46 übernehmen und so ausgelegt sein, dass diese den gewünschten Designanforderungen entsprechen.

Die im Zusammenhang mit den Figuren 18 bis 20 erläuterten Prinzipien sind auch auf Leitungssysteme höherer Ordnung, also mit mehr als zwei Leitern 28a, 28b übertragbar.

Die Nutzung einer definierten Bezugsfläche beziehungsweise eines Bezugsleiters 26 bietet hierbei einige Vorteile. Zum einen kann sie als Schirm zwischen dem jeweils als Doppelleitung ausgeführten Leiter 28 und Rückleiter 46 verwendet werden, um unerwünschte Kopplungen zwischen den Leitungspaaren zu unterdrücken. Weiterhin werden die Gleichtakt- und Gegentaktimpedanzen der Leitungen erheblich weniger durch externe Strukturen beeinflusst, die Funktion der Sonde 24 damit also wesentlich unabhängiger von der Geometrie oder dem Material des Behälters 12 oder dem Einbauort des Sensors 10. Wie soeben erläutert, sind bei der Optimierung derartiger Anordnungen die Gleichtakt- und Gegentaktimpedanzen recht unabhängig voneinander dimensionierbar.

Figur 21 zeigt eine weitere Ausführungsform der Sonde 24 als Flachsonde zur Anordnung an einer Wand des Behälters 12, wobei Figur 21a eine Schnittdarstellung und Figur 21b eine Draufsicht mit Blickrichtung auf die Wand des Behälters 12 ist. Der Bezugsleiter 26 ist flach ausgebildet und weist Aussparungen 60 für die Leiter 28a, 28b und Rückleiter 46a, 46b auf. Diese Aussparungen 60 können luft- oder teflongefüllt sein und andere Formen als die dargestellte aufweisen, welche die Leiter 28a, 28b und Rückleiter 46a, 46b anders einkapseln.

Die Sonde 24 kann vorab oder nachträglich mit einer Schutzschicht versehen werden, sei es durch eine Folie, eine Beschichtung oder das Überstreichen mit einem Schutzmaterial, welche die Sonde 24 bis zur Wand des Behälters 12 hin überdeckt. Damit wird ein Anhaften von Schmutz verhindert, und die Reinigung der Sonde 24 erfolgt praktisch unterschiedslos zu einem Behälter 12 ohne Sonde 24. Als Schutzmaterial eignen sich die mehrfach genannten Materialien wie Teflon, aber auch Schutzfarben, Schutzpasten oder Gele einschließlich Silikon. Das Schutzmaterial soll hinreichend hart, temperaturresistent und medienbeständig sein, um eine zuverlässige, leicht zu reinigende und langlebige Sonde 24 mit möglichst homogener, grat- und kantenfreier Oberfläche zu schaffen.

Die flache Anordnung hilft besonders in Hygieneanwendungen, in denen die Sonde 24 durch einen Sprühstrahl gut reinigbar sein sollte. Problematisch ist dabei, dass sich bei einer frei montierten Sonde 24 durch den Sprühschatten auf der Sondenrückseite eine schlechtere Reinigungswirkung ergibt. Eine flächig an der Wand montierte Sonde 24 vermeidet solche Abschattungsprobleme. Außerdem behindert diese Sonde 24 etwa beim Befüllen oder Reinigen des Behälters 12 deutlich weniger und ist damit ihrerseits vor Beschädigungen geschützt.

Es ist prinzipiell denkbar, den metallischen oder nichtmetallischen Behälter 12 von vorne herein integral mit der Sonde 24 auszubilden. Das erschwert aber das Nachrüsten und schafft Abhängigkeiten zum Herstellungsprozess des Behälters 12. Die Anbringung an der Wand des Behälters 12 erfolgt beispielsweise durch Verkleben des flachen Bezugsleiters 26 mit einem geeigneten Mehrkomponentenkleber, durch Verschweißen oder andere für die verwendeten Materialien geeignete Verbindungstechniken. Solche Verarbeitungsschritte dürfen selbstverständlich eine Hygienebeschichtung nicht beschädigen. Vorteilhaft ist, wenn der Bezugsleiter 26 aus einem elektrisch gut leitenden, gleichzeitig flexiblen und Medien-resistenten Material hergestellt ist, ähnlich zu Soft-Pads für die direkte Anbindung von Leitungen an eine Leiterplatte.

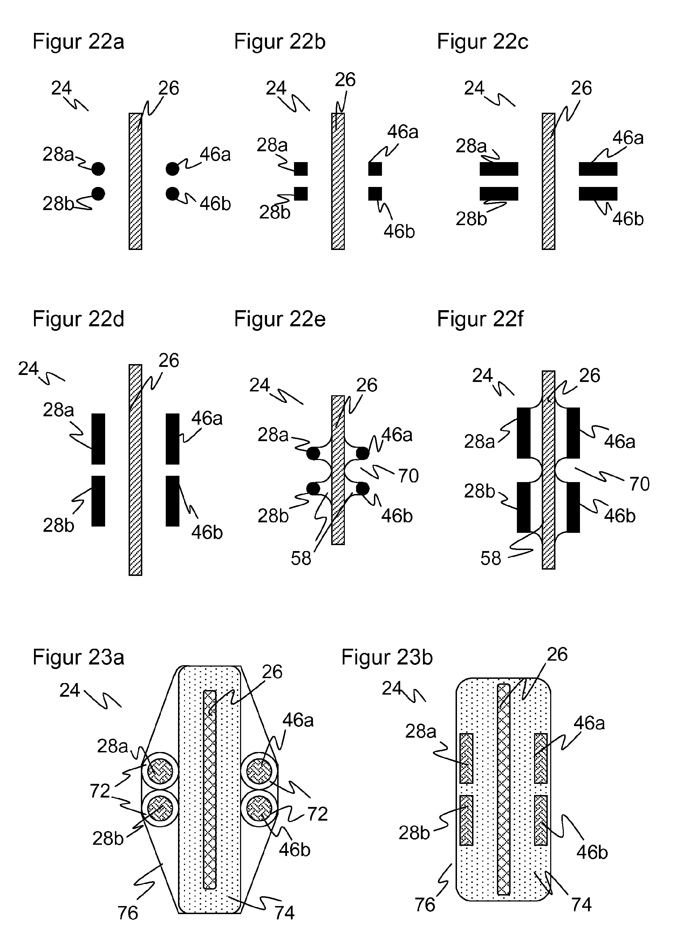

Figur 22 zeigt Querschnittsdarstellungen verschiedener Ausführungsformen einer differentiell ausgeführten Sonde. Denkbar sind runde, quadratische oder auch länglich ausgebildete Signalleitungen. Zahlreiche weitere Varianten der entstehenden Lecher-Leitung über einer Bezugsfläche sind ähnlich wie in Figur 11 für koaxiale Ausführungsformen gezeigt möglich. Nicht erkennbar sind wegen der Querschnittsdarstellung die unteren Verbindungsbereiche zwischen jeweiligem Einzel-Innenleiter 28a, 28b und zugehörigem Einzel-Rückleiter 46a, 46b. Diese Verbindungsbereiche können ähnlich ausgestaltet sein wie oben zu den Figuren 9 und 10 beschrieben, so dass also beispielsweise eine doppelte runde oder eckige U-Form entsteht.

Der als Bezugsfläche ausgebildete Bezugsleiter 26 trägt erheblich zur Funktionalität der Sonde 24 bei und wirkt als Schirm, welcher den hinlaufenden von dem rücklaufenden Signalpfad entkoppelt. Vollständig offene Bauformen wie in den Figuren 22a-22d sind geeignet für Medien 14 mit besonders niedriger relativer Dielektrizitätskonstante $\varepsilon_r$. Anforderungen an die mechanische Stabilität des Aufbaus können es aber erforderlich machen, die Einzelleiter 28, 46 gegenüber der Bezugsfläche 26 definiert zu positionieren. Ähnlich wie in der Ausführungsform gemäß Figur 14b können dafür durchgängige Kunststoffträger mit möglichst niedriger Dielektrizitätskonstante $\varepsilon_r$ eingesetzt werden, beispielsweise Teflon. Es ist vorteilhaft, jeweils eine Nut 70 zwischen den Kunststoffträgern der Einzelleiter vorzusehen, um möglichst wenig Material zu verwenden und damit das Feld gegenüber Vakuum so wenig wie möglich zu beeinträchtigen. Denkbar ist aber auch, auf diese Nuten 70 zu verzichten oder sie anders auszubilden.

Figur 23 zeigt eine weitere Ausführungsform der Erfindung, bei welcher die Sonde 24 flexibel ausgestaltet ist. Die ist besonders bei großen Behältern 12 und längeren Sonden 24 vorteilhaft, etwa bis in den Bereich von 10 Metern Länge und mehr. Dann sind starre Sonden 24 unhandlich und Seilsonden bevorzugt.

Die Ausführungsform gemäß Figur 23a zeigt jeweils zwei als runde Adern ausgebildete Innenleiter 28a, 28b und Rückleiter 46a, 46b, welche von einem isolierenden Mantel 72 umgeben sind. Der mittig angeordnete Bezugsleiter 26 hat einen langgestreckten Querschnitt und ist von einem isolierenden Material 74 umgeben, um Innenleiter 28 und Rückleiter 46 zu beabstanden. Am unteren Ende der Sonde 24 wird jeweils eine Ader des Innenleiters 28a, 28b mit der zugehörigen Ader des Rückleiters 46a, 46b elektrisch verbunden. Die Sonde 24 insgesamt ist mit einem passenden Schrumpfschlauch 76 umhüllt.

In der Ausführungsform gemäß Figur 23b ist das isolierende Material 74 weiter ausgedehnt und fungiert gleichzeitig als Mantel 72. Es entsteht eine komplett umspritzte Mehrdrahtleitung, welche optional mit einem zusätzlichen Schrumpfschlauch 76 umgeben werden kann.

Alle Leiter 26, 28, 46 sind flexibel und bevorzugt litzenartig aufgebaut, bestehen also aus einer Vielzahl von Einzeldrähten. Der Bezugsleiter 26 kann ein Stahldrahtgeflecht aufweisen, unter anderem um der Belastung durch ein Gewicht am Ende der Sonde 24 standzuhalten oder ein Abspannen gegen den Boden des Behälters 12 zu ermöglichen.

Es entsteht bei dieser Ausführungsform ein homogenes mehradriges Kabel, welches flexibel ist und sich deshalb besonders für große Messbereiche eignet. Alternativ zu der Darstellung kann auch jeweils nur ein Innenleiter 28 und ein Rückleiter 46 vorgesehen sein und somit auf die differentielle Leitungsführung verzichtet werden.

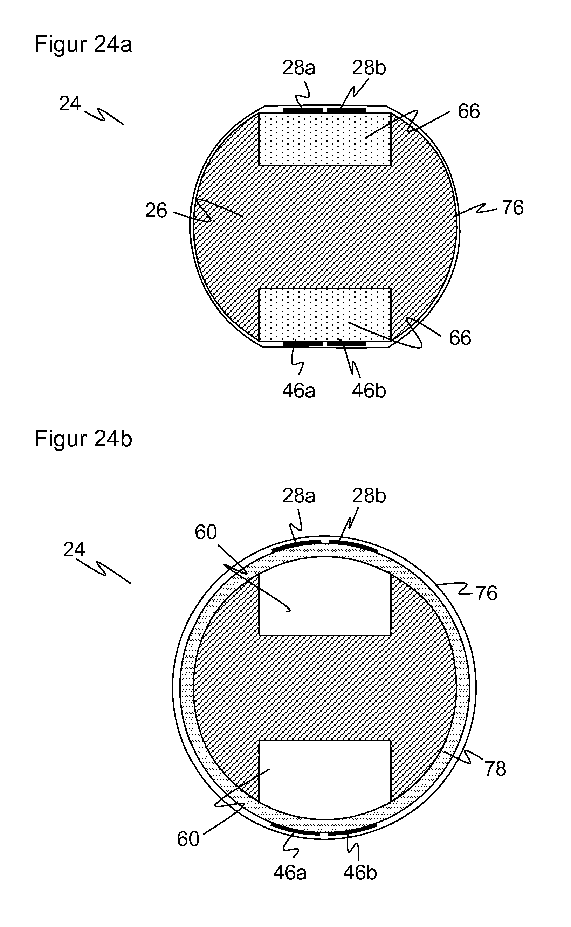

Figur 24 zeigt weitere Ausführungsformen einer nicht flexiblen Sonde 24 für hohe mechanische Beanspruchung. Entgegen der Darstellung ist alternativ auch eine einfache statt einer differentiellen Signalführung denkbar. Der Bezugsleiter 26 ist hier als massives Stangenmaterial ausgeführt, dessen Aussparungsnuten 66 bei der Ausführungsform gemäß Figur 24a zur weiteren Erhöhung der Stabilität materialgefüllt sind. Bei der Ausführungsform gemäß Figur 24b ist eine umgebende druckfeste Kunststoffröhre 78 vorgesehen, so dass die Aussparungsnut 60 luftgefüllt sein kann.

Die Beschreibung folgt in ihrem Verlauf einer Entwicklung ausgehend von einer herkömmlichen Koaxialsonde 24. Die zu den einzelnen Figuren beschriebenen Ausführungsformen sind dabei nicht als in sich abgeschlossen zu verstehen, denn zahlreiche Merkmale einer Ausführungsform lassen sich auch in anderen Ausführungsformen einsetzen. Derartige Kombinationen sind an manchen Stellen explizit genannt, wodurch aber die Kombinationsmöglichkeiten nicht beschränkt werden sollen. Mögliche Kombinationen betreffen nicht abschließend die Materialen, das Vorsehen, die Wahl und die Anordnung eines Abschlusswiderstands 44, die Öffnungen zum Flüssigkeitsaustausch, die Querschnitte der verschiedenen Leiter, die Anschaltungen und die verbesserten Auswertungsverfahren aufgrund von Pulsen bei den Positionen B, D und E analog der Figur 5.

**Patentansprüche**

**1.** Sensor (10) nach dem TDR-Prinzip, insbesondere TDR-Füllstandssensor für die Anwendung im Lebensmittelbereich, mit einer Sonde (24) zur Führung eines elektromagnetischen Signals, mit einem Sender (38) und einem Empfänger (40) zum Aussenden und Empfangen des Signals an einem ersten Sondenende sowie mit einer Steuerung (22, 36), welche dafür ausgebildet ist, die Entfernung einer Grenzfläche (18) anhand der Laufzeit in der Sonde (24) geführter und an der Grenzfläche (18) reflektierter Signale zu bestimmen, wobei die Sonde (24) mindestens einen ersten Leiter (28a) und einen zweiten Leiter (28b) aufweist und wobei die Steuerung (22, 36) dafür ausgebildet ist, das Signal des ersten Leiters (28a) und des zweiten Leiters (28b) in Gleichtakt- und/oder Gegentaktansteuerung einzukoppeln und/oder auszuwerten,
**dadurch gekennzeichnet,**
**dass** für jeden Leiter (28a, 28b) ein Rückleiter (46a, 46b) vorgesehen ist, der mit dem zugehörigen Leiter (28a, 28b) an einem dem ersten Sondenende gegenüberliegenden zweiten Sondenende elektrisch verbunden ist, so dass das Signal auf den Rückleitern (46a, 46b) zurücklaufen kann.

**2.** Sensor (10) nach Anspruch 1,
wobei ein Abschluss (44) vorgesehen ist, um Artefaktpulse an Enden der Sonde (24) zu unterdrücken, und wobei der Abschluss (44) einen Kurzschluss, einen Leerlauf, einen induktiven Widerstand, einen kapazitiven Widerstand und/oder einen reellen Widerstand aufweist.

**3.** Sensor (10) nach Anspruch 2,
wobei der Abschluss (44) durch eine Dreiecksanordnung oder eine Sternanordnung der Abschlusselemente ($Z\pi12, Z10, Z20, Z\_1S, Z\_2S, Z\_S0, C$) derart dimensioniert und ausgebildet ist, dass Artefaktpulse sowohl bei Gleichtakt- wie bei Gegentaktsteuerung unterdrückt werden.

**4.** Sensor (10) nach einem der vorhergehenden Ansprüche,
wobei die Verbindung zwischen den Leitern (28a, 28b) und den Rückleitern (46a, 46b) eine runde U-Form oder eine eckige U-Form mit einer Laufstrecke parallel zu der Grenzfläche (18) aufweist, wobei die Verbindung hochfrequenzkompensiert ist, um Artefaktreflexe an den Winkelstellen zu unterdrücken oder zu vermeiden, und wobei insbesondere die Verbindung ein separates Leitungsstück als Teil eines Abstandselements bildet.

5. Sensor (10) nach einem der Ansprüche 2 bis 4, wobei der Abschluss (44) im Innenraum der Leiter angeordnet ist, oder wobei der Abschluss (44) an den Rückleitern (46a, 46b) vorgesehen oder an die Rückleiter (46a, 46b) angeschlossen innerhalb eines Messkopfes (20) am ersten Sondenende angeordnet ist.

6. Sensor (10) nach einem der vorhergehenden Ansprüche, wobei je Leiter (28a, 28b) ein Bezugsleiter vorgesehen ist, oder wobei ein gemeinsamer Bezugsleiter (26) vorgesehen ist, insbesondere als mittig zwischen den Leitern (28a, 28b) und den Rückleitern (46a, 46b) angeordnete Bezugsplatte, und wobei insbesondere die Leiter (28a, 28b) und Rückleiter (46a, 46b) von dem Bezugsleiter (26) beabstandet und/oder durch elektrisch isolierende Träger (58) mit dem Bezugsleiter (26) verbunden sind.

7. Sensor (10) nach Anspruch 6, wobei der Bezugsleiter (26) als Metallkern oder Träger mit Metallüberzug mit in Längsrichtung verlaufenden luft- oder materialgefüllten Aussparungsnuten (60) ausgebildet ist, und wobei Leiter (28a, 28b) und Rückleiter (46a, 46b) über den Aussparungsnuten (60) angeordnet, insbesondere Leiter (28a, 28b) und Rückleiter (46a, 46b) als Metallstreifen, Kupferstreifen oder Leiterbahnen auf Trägern (62) oder Leiterplatten ausgebildet sind, welche die Aussparungsnuten (60) abschließen.

8. Sensor (10) nach Anspruch 6 oder 7, wobei Bezugsleiter (26), Leiter (28a, 28b) und Rückleiter (46a, 46b) als flexible Leiter einer Seilsonde ausgebildet sind, insbesondere indem der Bezugsleiter (26) als Stahlgeflecht und Leiter (28a, 28b) und Rückleiter (46a, 46b) als Metalllitzen ausgeführt sind, wobei ein Isolationsmaterial (72, 74) die Leiter voneinander elektrisch isoliert und/oder nach außen schützt, um insgesamt ein mehradriges Kabel zu bilden.

9. Sensor (10) nach einem der vorhergehenden Ansprüche, wobei die Anordnung von Leitern (28a, 28b), Rückleitern (46a, 46b) und/oder Bezugsleiter (26) einen flachen Querschnitt aufweist, insbesondere indem alle Leiter (28a, 28b) und Rückleiter (46a, 46b) in einer Ebene angeordnet sind und der Bezugsleiter (26) eine geringe Dicke mit Aussparungen (60) für die Leiter (28a, 28b, 46a, 46b) aufweist, und die Sonde (24) somit dafür ausgebildet ist, nachträglich flach an einer Behälterwand angebracht und von einem leicht zu reinigenden Material niedriger Dielektrizitätskonstante wie Teflon ummantelt zu werden.

10. Sensor (10) nach einem der vorhergehenden Ansprüche, wobei die Sonde (10) hygienisch ausgebildet ist, insbesondere beschichtet oder mit einem Schrumpfschlauch (76) überzogen ist und/oder gerundete Kanten aufweist, wobei das Material der Sonde (24), der Beschichtung und/oder des Schrumpfschlauchs (76) schmutzabweisend und/oder antibakteriell ist.

11. Verfahren zur Messung des Abstands einer Grenzfläche (18) nach dem TDR-Prinzip, insbesondere zur Messung eines Füllstands im Lebensmittelbereich, bei dem mindestens ein elektromagnetisches Signal von einem Messkopf (20) ausgesandt, mittels einer Sonde (24) geführt und empfangen und aus der Laufzeit der Abstand ermittelt wird, wobei das Signal in Gleichtakt- oder Gegentaktansteuerung mindestens eines ersten Leiters (28a) und eines zweiten Leiters (28b) der Sonde (24) eingekoppelt und/oder ausgewertet wird,
**dadurch gekennzeichnet,**
**dass** das Signal in der Sonde (24) mittels je eines Rückleiters (46a, 46b), der elektrisch mit dem zugehörigen Leiter (28a, 28b) verbunden ist, zu dem Messkopf (20) zurückgeführt wird.

12. Verfahren nach Anspruch 11, wobei ein Artefaktpuls von Enden der Sonde (24) mittels eines Kurzschlusses, eines Leerlaufs, eines induktiven Widerstands, eines kapazitiven Widerstands und/oder eines reellen Widerstands unterdrückt wird.

13. Verfahren nach Anspruch 12, wobei Artefaktpulse in einer Dreiecksanordnung oder einer Sternanordnung von Abschlusselementen (Zπ12, Z10, Z20, Z_1S, Z_2S, Z_S0, C) sowohl bei Gleichtakt- wie bei Gegentaktsteuerung unterdrückt werden.

14. Verfahren nach einem der Ansprüche 11 bis 13, wobei die Sonde (24) nachträglich in einen Behälter eingebaut wird, indem Leiter (28a, 28b, 46a, 46b, 26) der Sonde (24) flach, insbesondere in einer gemeinsamen Ebene parallel zu der Behälterwand, an der Behälterwand angeordnet und von einem leicht zu reinigenden Material niedriger Dielektrizitätskonstante wie Teflon ummantelt werden.

**Claims**

1. A sensor (10) in accordance with the TDR principle, in particular a TDR filing level sensor for application in the food sector, having a probe (24) for the guidance of an electromagnetic signal, having a transmitter (38) and a receiver (40) for the transmission and reception of the signal at a first probe end, as well as having a control (22, 36) which is configured to determine the distance of a boundary surface (18) with reference to the propagation time of signals guided in the probe (24) and reflected at the boundary surface (18), wherein the probe (24) has at least one first conductor (28a) and one second conductor (28b) and wherein the control (22, 36) is configured to couple and/or to evaluate the signal of the first conductor (28a) and of the second conductor (28b) in a common mode control and/or a counter mode control;
**characterized in that**
a return conductor (46a, 46b) is provided for each conductor (28a, 28b), the return conductor being electrically connected to the associated conductor (28a, 28b) at a second probe end disposed opposite to the first probe end so that the signal can return at the return conductors (46a, 46b).

2. A sensor (10) in accordance with claim 1, wherein a terminal (44) is provided in order to suppress artefact pulses at ends of the probe (24), and wherein the terminal (44) has a short circuit, an idle state, an inductive resistance, a capacitive resistance and/or a real resistance.

3. A sensor (10) in accordance with claim 2, wherein the terminal (44) is dimensioned and configured by a triangular arrangement or a star-like arrangement of the terminal elements ($Z_\pi 12$, Z10, Z20, Z_1S, Z_2S, Z_S0, C) in such a way that artefact pulses are suppressed both for a common mode control as well as for a counter mode control.

4. A sensor (10) in accordance with any one of the preceding claims, wherein the connection between the conductors (28a, 28b) and the return conductors (46a, 46b) has a round U-shape or a square U-shape having a propagation path in parallel to the boundary surface (18), wherein the connection is high frequency compensated in order to avoid or to suppress artefact reflexes at the angular positions and wherein, in particular the connection forms a separate conductor piece as a part of a spacer element.

5. A sensor (10) in accordance with any one of the preceding claims 2 to 4, wherein the terminal (44) is arranged in the internal space of the conductor or wherein the terminal (44) is provided at the return conductors (46a, 46b) or is arranged connected to the return connector (46a, 46b) within a measurement head (20) at the first probe end.

6. A sensor (10) in accordance with any one of the preceding claims, wherein a reference conductor is provided per conductor (28a, 28b) or wherein a common reference conductor (26) is provided, in particular as a reference plate centrally arranged between the conductors (28a, 28b) and the return conductors (46a, 46b) and wherein in particular the conductors (28a, 28b) and the return conductors (46a, 46b) are spaced apart from the reference conductor (26) and/or connected to the reference conductor (26) by electrically insulated supports (58).

7. A sensor (10) in accordance with claim 6, wherein the reference conductor (26) is configured as a metal core or as a support with a metal cover having recess grooves (60) extending in the longitudinal direction filled with air or material, and wherein the conductors (28a, 28b) and the return conductors (46a, 46b) are arranged above the recess grooves (60), the conductors (28a, 28b) and the return conductors (46a, 46b) in particular being configured as metal strips, as cooper strips or as circuit paths at supports (62) or as circuit boards which terminate the recess grooves (60).

8. A sensor (10) in accordance with claim 6 or claim 7, wherein the reference conductor (26), the conductors (28a, 28b) and the return conductors (46a, 46b) are configured as flexible conductors of a cable probe, in particular in that the reference conductor (26) is configured as a steel mesh and the conductors (28a, 28b) and the return conductors (46a, 46b) are configured as metal strands, wherein an insulation material (72, 74) electrically insulates the conductors from one another and/or outwardly protects the conductors in order to form a multi core cable.

9. A sensor (10) in accordance with any one of the preceding claims, wherein the arrangement of conductors (28a, 28b), return conductor (46a, 46b) and/or reference conductor (26) has a flat cross section, in particular in that all conductors (28a, 28b) and return conductors (46a, 46b) are arranged in a plane and the reference conductor (26) has a smaller thickness with recesses (60) for the conductors (28a, 28b, 46a, 46b) and the probe (24) is thus configured to be retrospectively flatly attached at a container wall to be encapsulated by a material easy to be cleaned of low dielectric contact such as Teflon.

10. A sensor (10) in accordance with any one of the preceding claims, wherein the probe (10) is configured hygienically, in particular coated or covered with a shrink tubing (76) and/or has rounded edges, wherein the material of the probe (24), of the coating and/or of shrink tubing (76) is dirt-repellent and/or antibacterial.

**11.** A method for the measurement of a spacing of a boundary surface (18) in accordance with the TDR principle, in particular for the measurement of a filling level in the food sector, wherein at least one electromagnetic signal is transmitted by a measurement head (20), is guided and received by means of a probe (24) and the spacing is determined from the propagation time, wherein the signal is coupled and/or evaluated in a common mode control or a counter mode control by means of at least one first conductor (28a) and one second conductor (28b) of the probe (24),

**characterized in that**

the signal is electrically connected in the probe (24) to the associated conductor (28a, 28b) by means of a respective return conductor (46a, 46b) and is guided back to the measurement head (20).

**12.** A method in accordance with claim 11,

wherein an artefact pulse is suppressed at the ends of the probe (14) by means of a short circuit, an idle state, an inductive resistance, a capacitive resistance and/or a real resistance.

**13.** A method in accordance with claim 12,

wherein artefact pulses are suppressed in a triangular arrangement or a star like arrangement of terminal elements ($Z\pi12$, $Z10$, $Z20$, $Z\_1S$, $Z\_2S$, $Z\_S0$, $C$) in both the common mode control as well as in the counter mode control.

**14.** A method in accordance with any one of the claims 11 to 13,

wherein the probe (24) is retrospectively installed in a container in that conductors (28a, 28b, 46a, 46b, 26) of the probe (24) are arranged flatly, in particular in a common plane in parallel to the container wall, at the container wall and are covered by a material which can easily be cleaned of low dielectric constant, such as Teflon.

**Revendications**

**1.** Capteur (10) selon le principe TDR ("time domain reflectometry)" ou "réflectométrie en domaine temporel"), en particulier capteur de niveau de remplissage TDR pour l'application dans le domaine des produits alimentaires, comprenant une sonde (24) pour guider un signal électromagnétique, comprenant un émetteur (38) et un récepteur (40) pour émettre et recevoir le signal à une première extrémité de la sonde, et comprenant une commande (22, 36) qui est réalisée pour déterminer l'éloignement d'une surface limite (18) au moyen du temps de parcours des signaux guidés dans la sonde (24) et réfléchis au niveau de la surface limite (18), dans lequel la sonde (24) comprend au moins un premier conducteur (28a) et un second conducteur (28b), et dans lequel la commande (22, 36) est réalisée pour coupler et/ou analyser le signal du premier conducteur (28a) et du second conducteur (28b) suivant un pilotage en synchronisme et/ou en anti-synchronisme,

**caractérisé en ce que**

pour chaque conducteur (28a, 28b) il est prévu un conducteur de retour (46a, 46b), qui est relié électriquement au conducteur associé (28a, 28b) à une seconde extrémité de la sonde opposée à la première extrémité de la sonde, de sorte que le signal peut retourner sur les conducteurs de retour (46a, 46b).

**2.** Capteur (10) selon la revendication 1, dans lequel il est prévu une terminaison (44), pour inhiber les impulsions d'artefacts aux extrémités de la sonde (24), et dans lequel la terminaison (44) comprend un court-circuit, une boucle ouverte, une résistance inductive, une résistance capacitive et/ou une résistance réelle.

**3.** Capteur (10) selon la revendication 2,

dans lequel la terminaison (44) est réalisée par un agencement triangulaire ou un agencement étoile des éléments de terminaison ($Zp12$, $Z10$, $Z20$, $Z\_1S$, $Z\_2S$, $Z\_S0$, $C$) et dimensionnée de telle façon que les impulsions d'artefacts sont inhibées aussi bien suivant un pilotage en synchronisme que suivant un pilotage en anti-synchronisme.

**4.** Capteur (10) selon l'une des revendications précédentes,

dans lequel la liaison entre les conducteurs (28a, 28b) et les conducteurs de retour (46a, 46b) présentent une forme en U arrondi ou une forme en U à coins vifs avec un trajet de propagation parallèle à la surface limite (18), et la liaison est compensée vis-à-vis des hautes fréquences afin d'inhiber ou d'éviter des réflexes d'artefacts au niveau des emplacements en coin, et dans lequel en particulier la liaison forme une pièce de liaison séparée à titre de partie d'un élément d'écartement.

**5.** Capteur (10) selon l'une des revendications 2 à 4, dans lequel la terminaison (44) est agencé dans l'espace intérieur des conducteurs, ou dans lequel la terminaison (44) est prévue sur les conducteurs de retour (46a, 46b), ou bien est agencée raccordée aux conducteurs de retour (46a, 46b) à l'intérieur d'une tête de mesure (20) à la première extrémité de la sonde.

**6.** Capteur (10) selon l'une des revendications précédentes,

dans lequel il est prévu pour chaque conducteur (28a, 28b) un conducteur de référence, ou dans lequel il est prévu un conducteur de référence commun (26), en particulier sous la forme d'une plaque de référence agencée au milieu entre les conducteurs (28a, 28b) et les conducteurs de retour (46a, 46b), et dans lequel en particulier les conducteurs (28a, 28b) et les conducteurs de retour (46a, 46b) sont à distance du conducteur de référence (26) et/ou sont reliés au conducteur de référence (26) via des supports électriquement isolants (58).

7. Capteur (10) selon la revendication 6,
dans lequel le conducteur de référence (26) est réalisé sous forme de noyau métallique ou de support avec un revêtement métallique avec des rainures évidées (60) s'étendant en direction longitudinale et remplies d'air ou de matériau, et dans lequel les conducteurs (28a, 28b) et les conducteurs de retour (46a, 46b) sont agencés au-dessus des rainures évidées (60), et en particulier les conducteurs (28a, 28b) et les conducteurs de retour (46a, 46b) sont réalisés sous forme de rubans métalliques, de rubans de cuivre, ou de pistes conductrices sur des supports (62) ou sur des cartes à circuits imprimés, qui referment les rainures évidées (60).

8. Capteur (10) selon la revendication 6 ou 7,
dans lequel le conducteur de référence (26), les conducteurs (28a, 28b) et les conducteurs de retour (46a, 46b) sont réalisés sous forme de conducteurs flexibles d'une sonde à câble, en particulier du fait que le conducteur de référence (26) est réalisé sous forme d'acier tressé et que les conducteurs (28a, 28b) et les conducteurs de retour (46a, 46b) sont réalisés sous forme de torons métalliques, dans lequel un matériau d'isolation (72, 74) isole électriquement les conducteurs les uns par rapport aux autres et/ou les protège vers l'extérieur, afin de former dans l'ensemble un câble à plusieurs fils.

9. Capteur (10) selon l'une des revendications précédentes, dans lequel l'agencement des conducteurs (28a, 28b), des conducteurs de retour (46a, 46b) et/ou du conducteur de référence (26) présente une section aplatie, en particulier en ce que tous les conducteurs (28a, 28b) et les conducteurs de retour (46a, 46b) sont agencés dans un plan et le conducteur de référence (26) présente une faible épaisseur avec des évidements (60) pour les conducteurs (28a, 28b, 46a, 46b), et la sonde (24) est par conséquent réalisée pour être rapportée a posteriori à plat sur une paroi d'un récipient et pour être enrobée avec un matériau facile à nettoyer et présentant une faible constante diélectrique, comme du Téflon.

10. Capteur (10) selon l'une des revendications précédentes,
dans lequel la sonde (10) est réalisée de manière hygiénique, en particulier revêtue ou recouverte d'une gaine rétractable (76) et/ou présente des arêtes arrondies, et le matériau de la sonde (24), du revêtement et/ou de la gaine rétractable (76) est antisalissures et/ou antibactérien.

11. Procédé pour la mesure de la distance d'une surface limite (18) suivant le principe TDR, en particulier pour la mesure d'un niveau de remplissage dans le domaine des produits alimentaires, dans lequel au moins un signal électromagnétique est émis par une tête de mesure (20), guidé au moyen d'une sonde (24) et reçu, et on détermine la distance à partir du temps de parcours, dans lequel le signal est couplé et/ou analysé suivant un pilotage en synchronisme ou en anti-synchronisme d'au moins un premier conducteur (28a) et un second conducteur (28b) de la sonde (24),
**caractérisé en ce que**
le signal est retourné à la tête de mesure (20) dans la sonde (24) au moyen d'un conducteur de retour respectif (46a, 46b), qui est relié électriquement au conducteur associé (28a, 28b).

12. Procédé selon la revendication 11,
dans lequel une impulsion d'artefact venant des extrémités de la sonde (24) est inhibée au moyen d'un court-circuit, d'une boucle ouverte, d'une résistance inductive, d'une résistance capacitive et/ou d'une résistance réelle.

13. Procédé selon la revendication 12,
dans lequel les impulsions d'artefacts sont inhibées dans un agencement triangulaire ou dans un agencement étoile d'éléments de terminaison (Zp12, Z10, Z20, Z_1S, Z_2S, Z_S0, C) aussi bien lors du pilotage en synchronisme que lors du pilotage en anti-synchronisme.

14. Procédé selon l'une des revendications 11 à 13,
dans lequel la sonde (24) est intégrée a posteriori dans un récipient, en agençant les conducteurs (28a, 28b, 46a, 46b, 26) de la sonde (24) à plat, en particulier dans un plan commun parallèlement à la paroi du récipient, sur la paroi du récipient et en les enrobant avec un matériau facile à nettoyer présentant une faible constante diélectrique, comme du Téflon.

Figur 1
(Stand der Technik)

Figur 2
(Stand der Technik)

Figur 3

22

10

20

24

26

28

44

46

48

Figur 4

10

22

44

24

26

28

50

46

48

## Figur 5

## Figur 6

## Figur 7

Figur 8a

Figur 8b

Figur 8c

Δt

Figur 9a

10

20

22

44

IXb

IXb

24

16

26

46

18

28

14

12

Figur 9b

28

26

24

50

46

Figur 9c

26

54

28

46

18

Figur 10a

10

Figur 10b

Figur 11

Figur 12

Figur 13

Figur 14a

Figur 14b

Figur 15

Figur 16a

Figur 16b

Figur 17

$\underline{Z}o\text{-}odd$

$\underline{Z}o\text{-}even$

Figur 18

Figur 19

## Figur 20

## Figur 21a

## Figur 21b

Figur 22a

Figur 22b

Figur 22c

Figur 22d

Figur 22e

Figur 22f

Figur 23a

Figur 23b

Figur 24a

Figur 24b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0799407 B1
- DE 10043838 A1
- DE 10101714 A1
- DE 19958584 C1
- US 20070090992 A1
- DE 10044888 A1
- WO 02063249 A2
- US 20040046571 A
- US 4135397 A
- EP 1069649 A1
- WO 9824013 A2
- EP 1186869 A2